(19) Europäisches Patentamt

European Patent Office

Office européen des brevets

(11) **EP 0 818 669 B1**

(12) **EUROPEAN PATENT SPECIFICATION**

(45) Date of publication and mention
of the grant of the patent:
**26.09.2001   Bulletin 2001/39**

(51) Int Cl.[7]: **G01G 23/10**

(21) Application number: **97202733.8**

(22) Date of filing: **03.05.1994**

(54) **Weighing machine with stoppage of vibration correction**

Waage mit Sperrung der Vibrationskorrektur

Dispositif de pesage avec stopage de correction des vibrations

(84) Designated Contracting States:
**DE ES FR GB IT**

(30) Priority:  **30.04.1993  JP  12785593**
       **30.04.1993  JP  12785693**
       **15.12.1993  JP  34353993**
       **15.12.1993  JP  34354093**
       **31.12.1993  JP  35270093**

(43) Date of publication of application:
**14.01.1998   Bulletin 1998/03**

(62) Document number(s) of the earlier application(s) in
accordance with Art. 76 EPC:
**94303195.5 / 0 622 617**

(73) Proprietor: **ISHIDA CO., Ltd.**
**Kyoto-shi, Kyoto 606 (JP)**

(72) Inventors:
 • **Nakamura, Yoshihiro, Ishida Co., Ltd.**
**Ritto-cho, Kurita-gun, Shiga (JP)**

 • **Wakasa, Yukio, Ishida Co., Ltd.**
**Ritto-cho, Kurita-gun, Shiga (JP)**
 • **Naito, Kazufumi, Ishida Co., Ltd.**
**Ritto-cho, Kurita-gun, Shiga (JP)**
 • **Tokumaru, Hidekatsu, Ishida Co., Ltd.**
**Ritto-cho, Kurita-gun, Shiga (JP)**
 • **Tajiri, Shoko, Ishida Co., Ltd.**
**Ritto-cho, Kurita-gun, Shiga (JP)**

(74) Representative: **Skone James, Robert Edmund**
**GILL JENNINGS & EVERY**
**Broadgate House**
**7 Eldon Street**
**London EC2M 7LH (GB)**

(56) References cited:
**EP-A- 0 122 796       EP-A- 0 129 249**
**EP-A- 0 418 567       EP-A- 0 429 725**
**EP-A- 0 430 695       EP-A- 0 432 979**
**FR-A- 2 418 451**

**Description**

This invention relates to weighing machines using load sensors such as load cells set on a floor to measure the weight of articles such as food items and industrial machine parts. More particularly, the invention relates to means for correcting the effects of lower-frequency floor vibrations on weight signals generated and processed by such a weighing machine.

Floor vibrations usually have lower frequencies than the vibrations caused by an object as it is placed on a weighing machine to be weighed. Thus, it may be thought that a filter can be used to eliminate such lower-frequency vibrations from the weight signals, but the cutoff frequency of the filter must be set low, and this makes the filtering time longer, adversely affecting the speed of weight measurements. U.S. Patent 4,624,331 disclosed a weighing machine having not only a scale cell for measuring the weight of an object and outputting a weight signal indicative of the measured weight, but also a dummy cell set on the same floor as the scale cell such that the effects of the floor vibrations can be eliminated from the weight signal by inverting the dummy signal outputted from the dummy cell and adding it to the weight signal from the scale cell. In this manner, the cutoff frequency of the filter can be set higher, and hence the weighing speed is not reduced.

With a prior art weighing machine of this type, however, the scale cell and the dummy cell must be set close to each other because the floor at the positions of the two cells is assumed to be vibrating under the same conditions. If the conditions of vibrations are different at the positions of the cells, corrections cannot be effected accurately by subtracting the dummy signal of the dummy cell from the weight signal. There may even be situations where the error becomes magnified by the "correction". In short, the choice of the position for installing the dummy cell becomes extremely limited, and the degree of freedom in designing the weighing machine is reduced. If there is not much free space in the neighborhood of the scale cell, in particular, it is extremely difficult to find an adequate place for installing the dummy cell for this purpose. It now goes without saying that the difficulty of this kind is magnified in the case of a combinational weighing machine having a plurality of scale cells and calculating combinations of weight signals therefrom to select a particular combination satisfying a predetermined criterion because each of a large number (such as 10 or 14) of scale cells will have to be provided with a dummy cell associated therewith. Moreover, this has the adverse effects of making the machine large and complicated in structure.

Japanese Patent Publication Tokkai 64-32122 disclosed a combinational weighing machine adapted to determine the vibration characteristics of the floor from the average of weight signals outputted from those load sensors not selected in the preceding cycle of combinational calculations and to thereby correct the signals outputted from the selected load sensors. This correction routine is based, however, on the assumption that the floor vibrations are identical at the positions of the plurality of load sensors. If this assumption does not hold, the effects of floor vibrations cannot be eliminated accurately by subtracting such an average value.

Another problem with prior art methods using a scale cell in combination with another cell for detecting the floor vibrations relates to the difference in sensitivity between the two cells. In other words, signal levels from these two cells are usually different even if they are subjected to identical loads. This difference in sensitivity is due not only to the material, shape, size and fabrication conditions of the cells (or sensitivity difference characteristically of the cells) but also to the difference in the load. By prior art correction methods by subtracting the signal indicative of the floor vibrations from the weight signal only the sensitivity difference characteristic of the cells (hereinafter referred to as the cell sensitivity) was corrected. This was in part because the weight of the target object, which is to be determined, is a part of the load on the scale cell and is basically an unknown. Since the load on the scale cell may be very different from the load on the vibration-detecting cell, however, prior art correction methods ignoring the sensitivity differences due to the difference in load (hereinafter referred to as the weight sensitivity) cannot be accurate. Accuracy in measurements is believed to decline as the weight of the object being weighed increases.

In accordance with the present invention, a weighing machine comprises a scale cell for weighing an object and outputting a weight signal indicative of measured weight value of said object; a vibration-detecting cell set on a same floor as said scale cell for outputting a floor vibration signal indicative of the vibration of said floor; correcting means for correcting said weight signal on the basis of said floor vibration signal outputted from said vibration-detecting cell and thereby generating vibration corrected signal indicative of corrected weight value of said object not containing effects of said vibration of said floor; and correction control means for detecting vibration components of said floor and stopping operations of said correcting means by comparing said vibration components with a reference value.

The invention provides a weighing machine capable of accurately removing the effects of floor vibrations from weight signals to thereby yield highly accurate results of weighing.

Further the invention provides means for accurately and quickly removing the effects of floor vibrations on weight values obtained by a weighing machine independent of the size of the weight of the object being weighed.

Weighing machines in accordance with the invention can be made compact and to cost less.

In some aspects, the weighing machine does not require any extra dummy or vibration-detecting cells or amplifiers therefor but is still capable of accurately removing the effects of floor vibrations from weight signals even in situations where the conditions of vibrations are different at the positions of its load sensors.

The invention can also provide a weighing machine capable of providing an accurate weight value independent of whether the amplitude of floor vibrations is large or small.

The weighing machine may preferably also comprise a cell sensitivity setting means for setting cell sensitivity ratio at least between the scale cells and the dummy cells (and possibly also among the scale cells and among the dummy cells) on the basis of the loads on the dummy cells and those of the scale cells when not carrying any object to be weighed and the spring constants of the scale and dummy cells, and also a cell sensitivity correcting means for generating cell sensitivity corrected signals to correct at least a weight signal or a dummy signal by using the aforementioned cell sensitivity ratio. Still more preferably, such a weighing machine may additionally comprise a weight sensitivity calculating means for calculating weight sensitivity ratio at least between the scale cells and the dummy cells (and possibly also among the scale cells) corresponding to the weight of the object to be weighed and a weight sensitivity correcting means for generating weight sensitivity corrected signals by using the aforementioned weight sensitivity ratio to correct at least either the weight or dummy signals.

With a weighing machine thus structured, the vibration modes of the floor at the positions of the scale cells are detected by the dummy cells, and the vertical displacements of the floor at these positions are calculated and used for correcting the weight signals. Accordingly, the weight signals can be accurately corrected even if the vibrating conditions of the floor are different at the positions of the scale and dummy cells. In other words, the dummy cells do not have to be necessarily installed close to the scale cells, and hence the degree of structural freedom of the weighing machine is improved. With the cell sensitivity correcting means, generation of errors due to differences in sensitivity of the cells can be prevented and the accuracy in correction can be improved. With the weight sensitivity calculating means, generation of errors due to changes in sensitivity due to the weight of the object being weighed can also be prevented and the accuracy in correction can be further improved.

The weighing machine may carry out cycles of combinational calculations to thereby select a combination of said weight signals satisfying a preset criterion, and discharging objects weighed by those of said load sensors which outputted said selected combination of weight signals, wherein the dummy cells are defined by the floor vibration calculating means as those scale cells whose weight signals not selected in the preceding cycle of the combinational calculations.

This weighing machine may preferably also comprise a cell sensitivity correcting means for generating cell sensitivity corrected signals and, more preferably, also a weight sensitivity calculating means for generating weight sensitivity corrected signals. The main advantage of this weighing machine is that neither dummy cells structured identically to the scale cells nor amplifiers therefore are needed for eliminating the effects of floor vibrations and hence that the cost of the weighing machine can be reduced. The dummy signals are used to calculate the vertical displacements of the floor as explained above regarding a weighing machine according to the first aspect of the invention. Cell sensitivity correcting means and weight sensitivity calculating means similarly contribute to further improving the accuracy in the corrections.

The floor vibration correcting means may include:

cell sensitivity setting means for setting sensitivity ratio K between said scale cell when not subjected to the weight of any object to be weighed and said dummy cells;

initial load setting means for setting initial load M of said scale cell when not subjected to the weight of any object to be weighed; and

weight calculating means for calculating a weight value m of said object according to

$$m = \{W(t) - \kappa V(t)\}/\{1 + (\kappa/M)V(t)\}$$

where W(t) is said weight component and V(t) is said vibration component.

In this case, the floor vibration correcting means serves to eliminate the effects of floor vibrations obtained from the vibration-detecting cell from the weight value of the object being weighed contained in the weight signal when the weight of this object has been added, and this floor vibration correcting means comprises a cell sensitivity setting means for setting the sensitivity ratio $\kappa$ between the scale cell when the weight of the object is not added and the vibration-detecting cell, an initial load setting means for setting an initial load value M for the scale cell when the weight of the object is not applied, and a weight calculating means for calculating the weight m of the object by a formula rather than by carrying out a time-consuming feedback process.

A weighing machine according to the present invention may also be adapted to provide accurate weight values independent of whether the amplitude of floor vibrations is large or small. Such a weighing machine may comprise, in addition to scale cells and dummy cells (the roles of which may be played by those of the scale cells not selected in the previous cycle of combinational calculation) as described above, not only a correcting circuit for correcting weight signals outputted from the scale cells on the basis of floor vibration signals outputted from the dummy cells and thereby generating vibration corrected signal indicative of corrected weight values not containing effects of the floor vibrations, but also correction control means for detecting amplitudes of the floor vibrations and stopping the operation of the correcting circuit if the detected amplitudes are not large enough, as compared to present reference values.

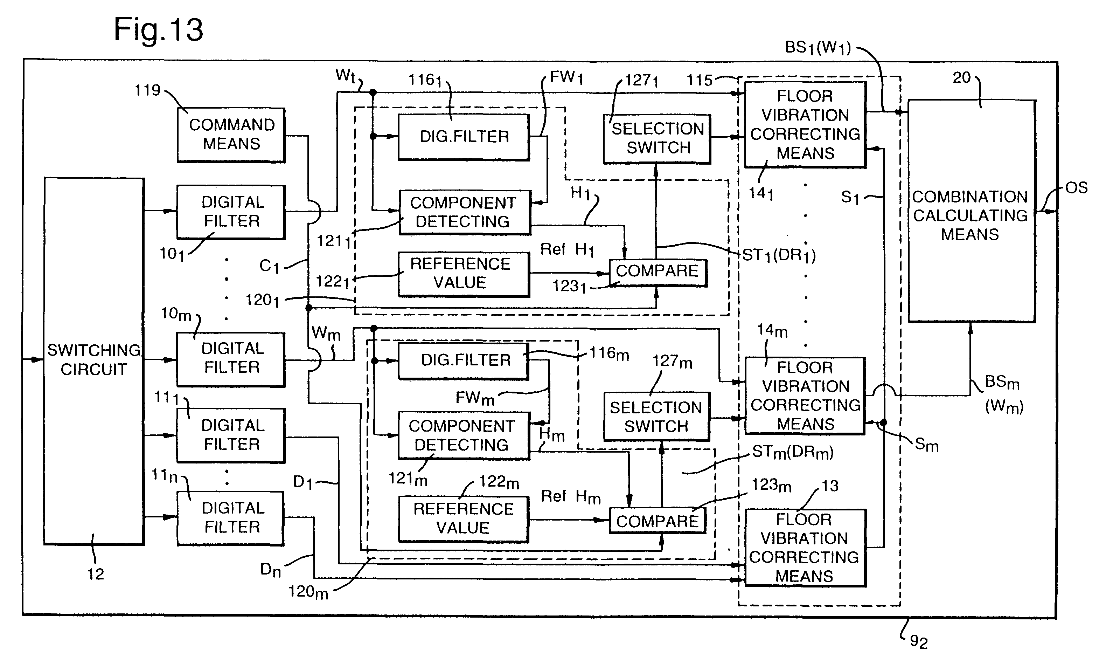

The accompanying drawings, which are incorporated in and form a part of this specification, illustrate several embodiments of the invention and comparative examples, to explain the principles of the invention. The correction control means 120 of single independent claim 1 are firstly described with Figure 13. In the drawings:

Fig. 1 is a block diagram of a signal processing system according to a first comparative example of a combinational weighing machine;

Fig. 2 is a block diagram of the CPU of Fig. 1;

Fig. 3 shows the shape and deformation of a load cell for explaining the theory of AFV (anti-floor vibration) technology:

Fig. 4 shows the positioning of the load cell of Fig. 3;

Fig. 5 is a block diagram of another CPU which may be used in place of the CPU shown in Fig. 1;

Fig. 6 is a model of oscillating system which is equivalent to Fig. 5;

Fig. 7 is a schematic side view of a combinational weighing machine to which the present invention can be applied;

Fig. 8 is a block diagram of a signal processing system according to a second comparative example of a combinational weighing machine structured as shown in Fig. 7;

Fig. 9 is a block diagram of the CPU of Fig. 8;

Fig. 10 is a block diagram of another CPU which may be used in place of the CPU shown in Fig. 9;

Fig. 11 is a block diagram of a signal processing system for a weighing machine according to a third comparative example;

Fig. 12 is a block diagram of a signal processing system according to a fourth comparative example; and,

Figs. 13-18 are block diagrams of CPUs which may be used in place of the CPU shown in Fig. 2 in accordance with embodiments of the invention.

Throughout the drawings, those components which are equivalent to one another, or at least substantially similar, are indicated by the same numerals, and their descriptions are not always repeated.

<u>Detailed Description of the Invention</u>

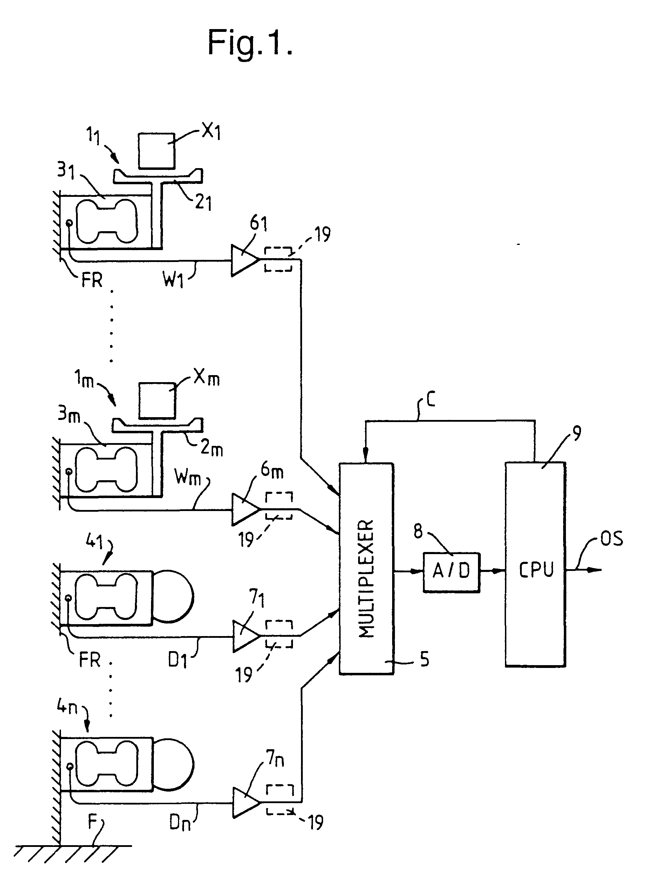

In what follows, the invention is described more in detail by way of some specific examples. With reference first to Fig. 1 which represents a signal processing system according to a first comparative example of a combinational weighing machine, there are a plural m-number of load sensors $1_1$-$1_m$ each comprising a weigh hopper $2_1$-$2_m$ and a scale call $3_1$-$3_m$ such that objects $X_1$-$X_m$ placed in the weigh hoppers $2_1$-$2_m$ are weighed respectively by the corresponding ones of the scale cells $3_1$-$3_m$ and analog weight signals $W_1$-$W_m$ representing their weights are outputted. There are also a plural n-number of dummy cells $4_1$-$4_n$ installed through frames FR on the same floor F as the scale cells $3_1$-$3_m$, being adapted to output analog dummy signals $D_1$-$D_n$ caused by the floor vibrations. The dummy cells $4_1$-$4_n$ may be installed either on the frames for the weighing machine or on separately prepared frames.

The analog weight signals $W_1$-$W_m$ outputted from the load sensors $1_1$-$1_m$ are amplified by amplifiers $6_1$-$6_m$ and inputted into a multiplexer 5. The dummy signals $D_1$-$D_n$ from the dummy cells $4_1$-$4_n$ are also amplified by amplifiers $7_1$-$7_n$ and inputted into the same multiplexer 5. The signals $W_1$-$W_m$ and $D_1$-$D_n$, selectively outputted from the multiplexer 5 in response to a switch signal c from a CPU 9, are converted into digital signals by an analog-to-digital (A/D) converter 8.

The CPU 9, which also serves as a calculating means, carries out vibration corrections and combinational calculations by using the digital weight and dummy signals $W_1$-$W_m$ and $D_1$-$D_n$ received through the A/D converter 8 and outputs open signals OS for selectively opening a combination of weigh hoppers $2_1$-$2_m$ which satisfies a preset criterion (such as having the total weight closest to a preset target weight value). Low frequency floor vibration components are thus eliminated such that the cutoff frequency of filters (to be explained below) can be set relatively high and the weighing speed can be improved.

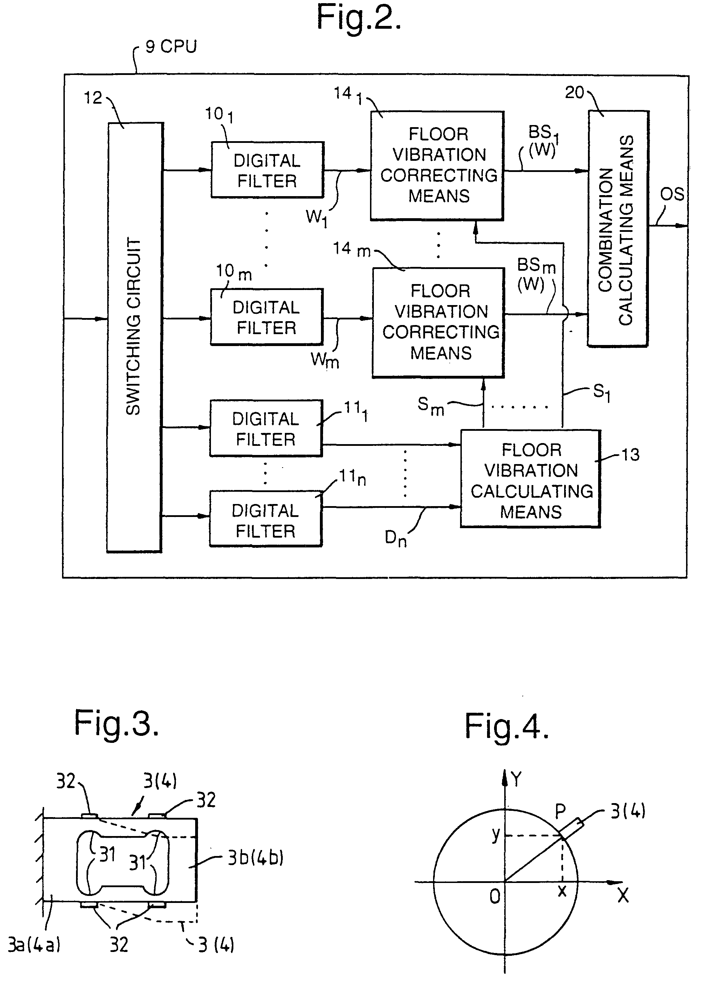

With reference next to Fig. 2, the CPU 9 contains digital filters $10_1$-$10_m$ and $11_1$-$11_n$. The weight and dummy signals $W_1$-$W_m$ and $D_1$-$D_n$, which are selectively outputted from the multiplexer 5 and converted into digital signals by the A/D converter 8, are passed through a switching circuit 12 and corresponding one of the digital filters $10_1$-$10_m$ and $11_1$-$11_n$ such that their components with relatively high frequencies, generated principally when objects X to be weighed are put inside the weigh hoppers $2_1$-$2_m$, are eliminated.

The CPU 9 also includes a floor vibration calculating means 13 for detecting the vibration mode of the floor on the basis of the digital dummy signals $D_1$-$D_n$ received through the filters $11_1$-$11_n$, calculating therefrom the vertical displacements of the floor at the positions of the scale cells $1_1$-$1_m$ and outputting displacement signals $S_1$-$S_m$ indicative of these calculated vertical displacements of the floor. These displacement signals $S_1$-$S_m$ are respectively received by floor vibration correcting means $14_1$-$14_m$ for respectively correcting the digital weight signals $W_1$-$W_m$ received respectively through the filters $10_1$-$10_m$. In other words, the effects of the vibrations represented by the displacement signals $S_1$-$S_m$ are subtracted from the measured weight values represented by the weight signals $W_1$-$W_m$ to generate and output vibration corrected weight signals $BS_1$-$BS_m$. Low frequency components of the floor vibrations are thus corrected, and this makes it possible to set the cutoff frequencies of the filters $10_1$-$10_m$ relatively high and to allow speedy weighing operations. The vibration corrected weight signals $BS_1$-$BS_m$ thus outputted are received by a combination calculating means 20 for selecting a particular combination thereof in view of a preset criterion such that the total weight represented by such combination be the closest to a preset target weight value, and outputting an selection signal (or open signal) OS to open those of the weigh hoppers $2_1$-$2_m$ corresponding to the selected combination. Since the correction operations are carried out digitally according to the illustrated example, more accurate corrections are possible than if they are done by using analog circuits among which there tend to be individual fluctuations.

In general, a method, such as the one described above, of detecting the vibration modes of a floor and canceling the vibration components of scale cells at arbitrary positions thereon is referred to as a multi-point AFV (anti-floor vibration) procass. If the scale cells are distributed two-dimensionally (say, on a horizontal plane), floor vibrations arc detected by dummy cells at three or more positions on the plane not in collinaar relationship, the vibration modes of the floor are detacted from the vibrations detected thereby, and the vibration components of the floor at arbitrary positions of the scale cells are obtained therefrom and subtracted from the weight values being outputted from the scale cells.

Fig. 3 shows the structure of a load cell 3(4) used as the scale and dummy cells $3_1$-$3_m$ and $4_1$-$4_n$ in the weighing machine described above. A load cell 3(4) of this type is provided with four strain gauges 32 attached individually near one of four notches 31 formed in a central opening therethrough to detect its deformation in terms of the strains measured thereby. These four strain gauges 32 form a Wheatstone bridge (not shown) which is adapted such that its output changes only if the load call 3(4) is deformed into a parallelogram as shown by a broken line. In other words, there is no change in its output if the load cell 3(4) undergoes any other kind of deformation. Thus, when there is a relative deformation between the fixed side 3a(4a) of the load cell 3(4) where it is attached to the floor and the free side 3b(4b) where a load is applied (indicated by an arrow), only the component of a parallelogrammic deformation is detected. When such load cells 3(4) are used in a combinational weighing machine as described above, therefore, only the perpendicular (vertical) components of the vibration modes of the floor need to be considered.

Consider, for example, a load cell 3(4) affixed at a position P(x, y) on an X-Y plane as shown in Fig. 4. The motion of the X-Y plane can be described in terms of the rotation around the X-axis, the rotation around the Y-axis and the motion along an axis (the Z-axis) perpendicular to both the X-axis and the Y-axis. The other modes of motion will not be discussed here because they are not detected by the load cell 3(4). Now, let the motion in the Z-direction caused by a rotary motion around the X-axis be denoted by B(t), that caused by a rotary motion around the Y-axis by A(t) and the motion in the direction of the Z-axis by C(t). Of the output signal from the load call at position P, the component $V_P$(t) contributed by the floor vibration is given as follows:

$$V_P(t) = xA(t)+yB(t)+C(t) \tag{1}$$

In order to obtain the values of A(t), B(t) and C(t), it is theoretically sufficient to detect the floor motion at three positions not in a collinear relationship and solve linear simultaneous equations with three unknowns. In practice, however, motion is detected at more than three positions because the output from each load sensor contains some measurement errors, and A(t), B(t) and C(t) are obtained preferably by a method of least squares. It is the floor vibration calculating means 13 that calculates the values of $V_P$(t) from A(t), B(t) and C(t) by using (1).

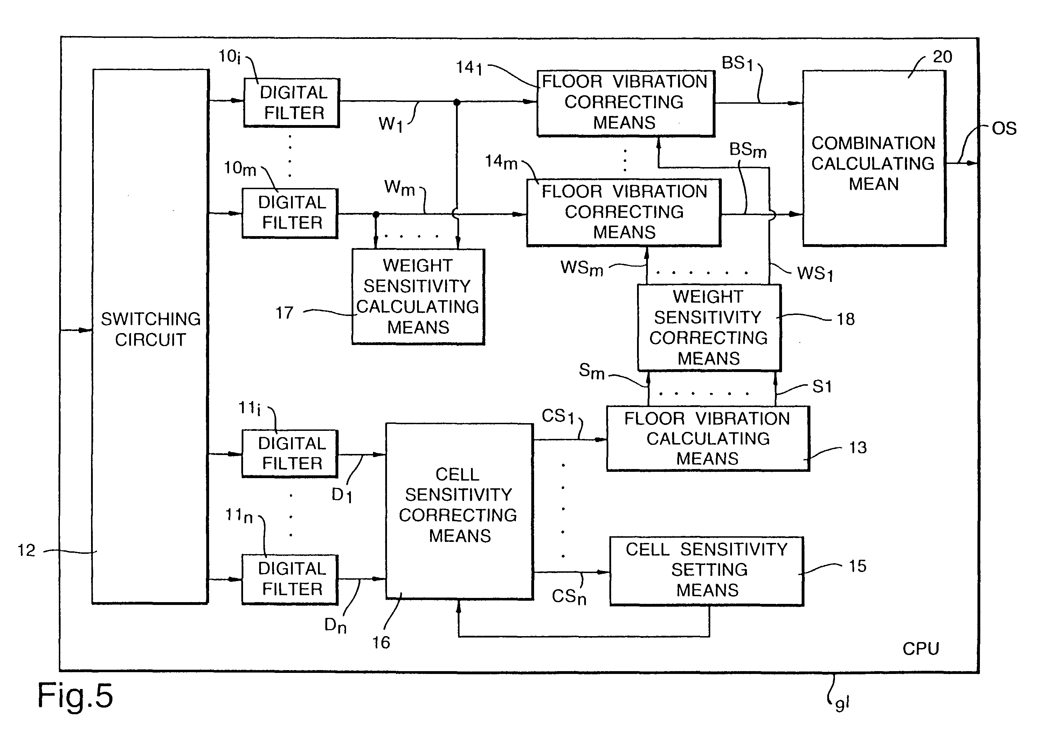

Fig. 5 shows the structure of another CPU $9_1$ which may be substituted for the CPU 9 shown in Fig. 2, being different therefrom in the following two aspects. Firstly, this CPU $9_1$ additionally includes a cell sensitivity setting means 15 and a cell sensitivity correcting means 16. The cell sensitivity setting means is serves to preliminarily set a cell sensitivity ratio between the scale cells 3 and the dummy cells 4 on the basis of the loads on the dummy cells 4 (or $4_1$-$4_n$ in Fig. 1), the loads on the scale cells 3 (or $3_1$-$3_m$ in Fig. 1) and the spring constant of the scale and dummy cells 3 and 4. The cell sensitivity correcting means 16 is for using the call sensitivity ratio set by the cell sensitivity setting means 15 to thereby correct the dummy signals D (or $D_1$-$D_n$) and generating cell sensitivity corrected signals $CS_1$-$CS_n$. secondly, there are further provided a weight sensitivity calculating means 17 and a weight sensitivity correcting means 18, which are for correcting the changes in sensitivity to the floor vibrations due to changes in the applied load. The weight sensitivity calculating means 17 serves to calculate the weight sensitivity ratio between the scale and dummy cells 3 and 4 as it changes according to the weights of the objects X being weighed. The weight sensitivity correcting means 18 serves to use the weight sensitivity ratio calculated by the weight sensitivity calculating means 17 to correct the displacement signals $S_1$-$S_m$ outputted from the floor vibration calculating means 13 and to thereby generate weight sensitivity corrected signals $WS_1$-$WS_m$.

With reference still to Fig. 5, wherein components which are substantially identical to those shown in and explained with reference to Fig. 2 are indicated by the same numerals, cell sensitivity corrections are performed by the cell sensitivity correcting means 16, and the dummy signals $D_1$-$D_n$ are converted to the levels of the weight signals $W_1$-$W_m$ by means of the cell sensitivity setting means 15. These converted signals (or the cell sensitivity corrected signals $CS_1$-$CS_n$) are used by the floor vibration calculating means 13 to calculate the floor vibrations. Further, the weight sensitivity correcting means 18 carries out sensitivity corrections according to the weights of the objects applied to the scale cells $3_1$-$3_m$, thereby outputting weight sensitivity corrected signals $WS_1$-$WS_m$, which are used by the floor vibration correcting means $14_1$-$14_m$ to subtract the vibration components of the floor represented by the weight sensitivity corrected signals $WS_1$-$WS_m$ from the weight signals $W_1$-$W_m$, thereby obtaining vibration corrected weight signals $BS_1$-$BS_m$.

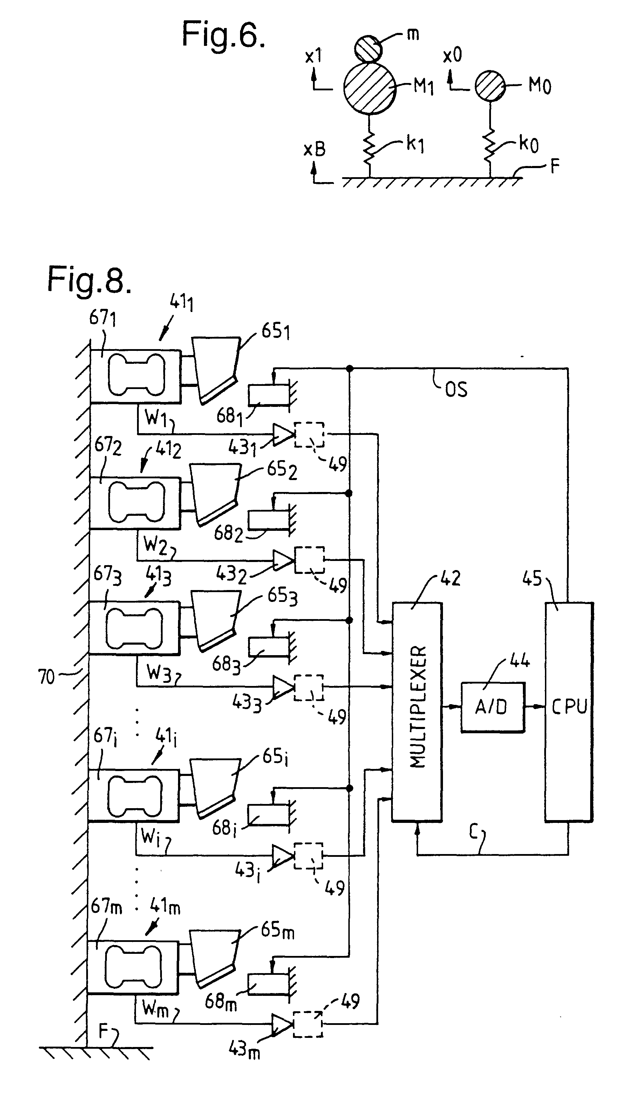

Corrections effected as explained above with reference to Fig, 5 can be more simply explained with reference to a model shown in Fig. 6 wherein the left-hand side and the right-hand side schematically represent a scale cell and a dummy cell, respectively. Let $M_0$ represent the load (as mass) on the free end of the dummy cell, $M_1$ represent the load (as mass) on the free end of the scale cell when carrying no object to be weighed, m represent the mass of an object to be weighed, and $k_0$ and $k_1$ be the spring constants respectively of the dummy and scale cells. If $x_0$, $x_1$ and $x_B$ represent the displacements respectively of the free end of the dummy and scale cells and the floor F, the equations of motions of the free ends of the cells can be expressed as follows:

$$(m + M_1)\ddot{x}_1 + k_1(x_1 - x_B) = 0 \tag{11}$$

$$M_0\ddot{x}_0 + k_0(x_0 - x_B) = 0 \tag{12}$$

Since each cell measures the relative displacement between the floor and its loaded end, (11) and (12) can be written as follows:

$$(m + M_1)\ddot{x}_{1B} + k_1 x_{1B} = -(m + M_1)\ddot{x}_B \tag{13}$$

$$M_0\ddot{x}_{0B} + k_0 x_{0B} = -M_0\ddot{x}_B \tag{14}$$

where $x_{1B} - x_1 - x_B$ and $x_{0B} = x_0 - x_B$.

The displacement of the floor is considered an input and the cell output is considered an output of a system. Then, a transmission function relating the system input and output can be obtained from (13) and (14), and frequency characteristics $G_1(j\omega)$ and $G_0(j\omega)$ on the weighing side and the floor side become as follows:

$$|G_1(j\omega)| = \left|\omega^2/(\omega_1{}^2 - \omega^2)\right| \tag{15}$$

$$|G_0(j\omega)| = \left|\omega^2/(\omega_0{}^2 - \omega^2)\right| \tag{16}$$

where $\omega_1{}^2 = k_1/(m + M_1)$ and $\omega_0{}^2 = k_0/M_0$, that is, $\omega_1$ is the characteristic frequency of the scale cell and $\omega_0$ is the characteristic frequency of the dummy cell

The sensitivity ratio $\beta$ between the scale cell side and the dummy cell side is, therefore,

$$\beta = |G_1(j\omega)/G_0(j\omega)| = \left|(\omega_0{}^2 - \omega^2)/(\omega_1{}^2 - \omega^2)\right|$$

$$= \left| (\omega_0{}^2/\omega_1{}^2)\{1 - (\omega/\omega_0)^2\}/\{1 - (\omega/\omega_1)^2\} \right| \qquad (17)$$

If $1 > (\omega/\omega_0)^2$ and $1 > (\omega/\omega_1)^2$, or if the characteristic frequency is much higher than the frequency requiring correction both on the scale cell side and the dummy cell side, (17) becomes as follows:

$$\beta = \omega_0{}^2/\omega_1{}^2 = \{1+ (m/M_1)\}(k_0 M_1/k_1 M_0) \qquad (18)$$

The second factor on the right-hand side of (18) represents the value of the sensitivity ratio between the two cells when m = 0, that is, when there is no object being weighed. The first factor on the right-hand side of (18) represents the change in the sensitivity of the scale cell when the weight of the object (of mass m) is applied to the scale cell, that is, the weight sensitivity ratio between the two cells.

In practice, the cell sensitivity ratio is preliminarily determined from the simple expression $k_0 M_1/k_1 M_0$. Thereafter, this value is set as the cell sensitivity ratio by means of the cell sensitivity setting means 15, and the cell sensitivity is corrected by the cell sensitivity correcting means 16. On the other hand, the weight sensitivity calculating means 17 calculates the weight sensitivity ratio from the expression $\{1+ (m/M_1)\}$, or the first factor on the right-hand side of (18), and correction of the weight sensitivity is carried cut by the weight sensitivity correcting means 18. The weight sensitivity correction may be carried out by using one of the scale cells as a standard to carry out weight sensitivity corrections between a plurality of scale and dummy cells and weight sensitivity corrections among the scale cells. Weight signal corrections can thus be carried out extremely accurately.

As a variation to the above, the cell sansitivity correcting means 16 and the weight sensitivity correcting means 18 may be connected to the output side of the digital filters $10_1$-$10_m$ for the weight signals such that one of the dummy cells 4 is used as a standard for correcting the sensitivities of the weight signals $W_1$-$W_m$ by converting them to the level of the dummy signals $D_1$-$D_n$ to thereby carry out the floor vibration corrections. In this situation, however, sensitivity corrected weight signals $W_1$-$W_m$ must be corrected again back to the level before the corrections.

As another variation to the above, the cell sensitivity correcting means 16 say be connected both to the sides of the weight signals and the dummy signals so as to be able to carry out cell sensitivity corrections not only between weight and dummy signals but also between weight signals and between dummy signals. In other words, the cell sensitivity and weight sensitivity correcting means 16 and 18 need only to be adapted to carry out sensitivity corrections according to at least one of either weight or dummy signals.

As explained above, the use of digital filters (as opposed to analog filters) is preferred also in all these examples both described above and to be described below because analog filters tend to have large fluctuations in their characteristics, but this invention is not limited to the use of digital filters. If analog filters are to be used instead of, or in addition to, the digital filters shown at $10_1$-$10_m$ and $11_1$-$11_n$, such analog filters are connected at 19 in Fig. 2.

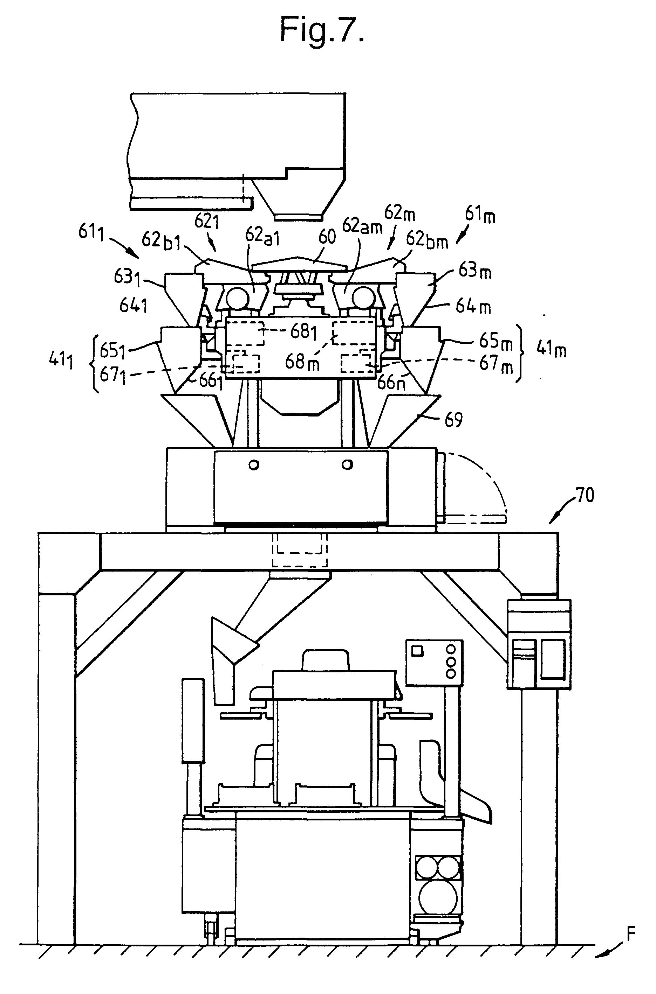

Fig. 7 shows schematically an example of combinational weighing machine to which the present invention can be effectively applied. In Fig. 7, numeral 60 indicates a dispersion table adapted to be vibrated and serving to radially disperse articles to be weighed as they are dropped from above and to thereby supply then to a plural m-number of weighing units $61_1$-$61_m$ disposed radially around the periphery of the table 60. Each of the weighing units $61_1$-$61_m$ is provided with a dispersion feeder $62_1$ having an electromagnetic vibrator $62_{ai}$ and a trough $62_{bi}$, a pool hopper $63_i$, a pool hopper gate $64_i$, a weigh hopper $65_i$, a weigh hopper gate $66_i$, a scale cell $67_i$ and a hopper gate driver $68_i$, where i is an dummy index i = 1-m. The weigh hoppers $65_1$-$65_m$, and the scale cells $67_1$-$67_m$ may be said to together form load sensors $41_1$-$41_m$. There is disposed below the load sensors $41_1$-$41_m$ a collector chute 69 in the shape of a conic or polygonal funnel for receiving weighed articles discharged from the weigh hoppers $65_1$-$65_m$ of the load sensors $41_1$-$41_m$. Numeral 70 indicates a base which is set on the same floor F. Since combinational weighing machines are well known and many structured as shown above have been described and sold commercially, the functions of each of these components will not be explained in detail herein.

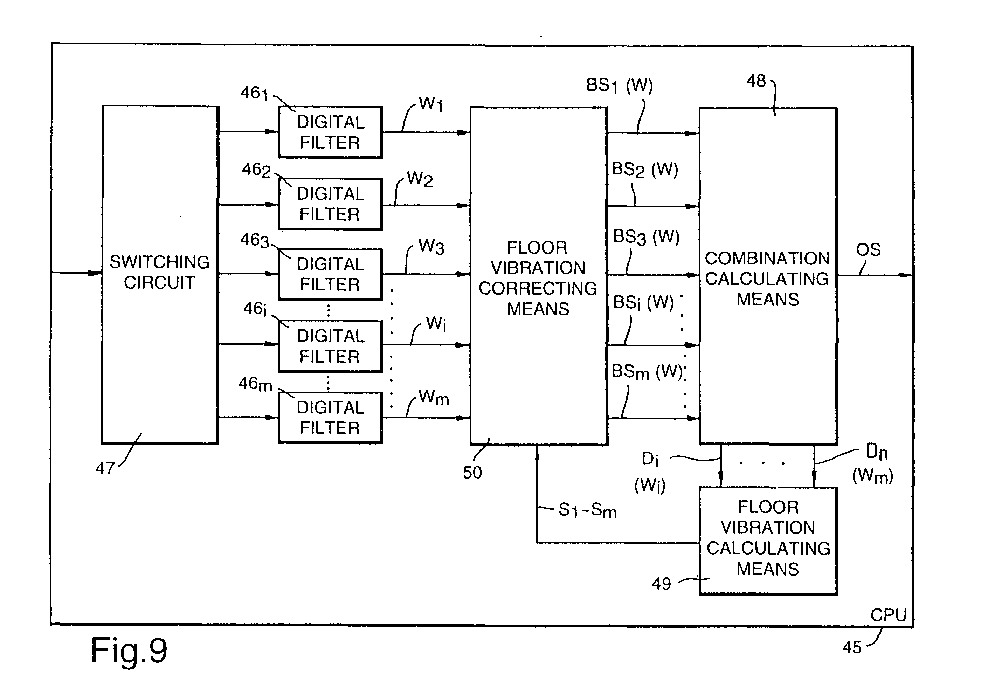

Fig. 8 represents a signal processing system according to a second comparative example of a combinational weighing machine structured as shown in Fig. 7. It is to be noted that this processing system is importantly different from the system shown in Fig. 1 in that there are no load cells identified specifically as dummy cells. As explained above with reference to Fig. 1, objects delivered to the weigh hoppers $65_1$-$65_m$ are weighed by the scale cells $67_1$-$67_m$, and analog weight signals $W_1$-$W_m$ indicative of the weight values obtained thereby are outputted therefrom, amplified by amplifiers $43_1$-$43_m$, received by a multiplexer 42, selectively outputted therefrom to an analog-to-digital (A/D) converter 44 in response to a switch signal c received from a CPU 45, and converted into digital weight signals.

The CPU 45, like the CPUs 9 and $9_1$ described above with reference to Figs. 2 and 5, carries out vibration corrections and combinational calculations but by using only the digital weight signals $W_1$-$W_m$ because there are no dummy cells outputting dummy signals.

As shown in Fig. 9, the CPU 45 contains digital filters $46_1$-$46_m$. The weight signals $W_1$-$W_m$ which are selectively outputted from the multiplexer 42 and converted into digital signals by the A/D converter 44, are passed through a switching circuit 47 and corresponding one of the digital filters $46_1$-$46_m$ such that components with relatively high frequencies generated principally when objects to be weighed are put inside the weigh hoppers $65_1$-$65_m$ are eliminated.

Numeral 48 indicates a combination calculating means which functions like the one shown at 20 in Figs. 2 and 5. Digital weight signals $W_1$-$W_m$ pass through floor vibration correcting means 50 (similar to the means $14_1$-$14_m$ described above) and are inputted into the combination calculating means 48 as vibration corrected weight signals $BS_1$-$BS_m$. Combinations of these vibration corrected weight values are calculated and particular one of them satisfying a preset criterion is selected. Suppose, for example, that the combination corresponding to the three load sensors $41_1$-$41_3$ are selected. The combination calculating means 48 outputs an open signal OS to cause the weighed objects to be dropped from the corresponding hoppers $65_1$-$65_3$ to the chute 69.

Normally, there are a plurality of load sensors that are not selected in a combination calculation. Let us assume that the load sensors $41_1$-$41_m$ were among those not selected in the preceding cycle. This means that weighed objects remain inside the weigh hoppers $65_1$-$65_m$ of these load sensors $41_1$-$41_m$ and hence no new objects are supplied into them from the corresponding pool hoppers $63_1$-$63_m$ for the next cycle of combinational calculations. As a result, no new vibrations will be caused to these weigh hoppers $65_i$-$65_m$. In other words, the corresponding load sensors $41_i$-$41_m$ are subjected only to the vibrations of the floor F. Thus, the vibration components of the weight signals $W_i$-$W_m$ shown in Fig. 9 become the same as those of the floor vibrations. It now goes without saying that the load sensors $41_i$-$41_m$ may include any of the load sensors $41_1$-$41_3$ which are selected.

Another function of the combination calculating means 48 is to treat those of the weight signals $W_i$-$W_m$ which were not selected in the preceding cycle of combinational calculations and output them as digital dummy signals $D_i$-$D_m$ to a floor vibration calculating means 49 for calculating the vibration mode of the floor on the basis of the vibration components of the received dummy signals $D_i$-$D_m$ to thereby calculate the vertical displacements of the floor at the positions of the load sensors $41_1$-$41_m$ and to output displacement signals $S_1$-$S_m$ indicative of the calculated displacements to the floor vibration correcting means 50.

The floor vibration correcting means 50 serves to use the received displacement signals $S_1$-$S_m$ to correct the weight signals $W_1$-$W_m$, that is, to subtract the effects of the floor vibrations represented by the displacement signals $S_1$-$S_m$ from the weight values of the weighed objects represented by the weight signals $W_1$-$W_m$, thereby eliminating the effects of low-frequency floor vibrations and generating and outputting vibration corrected weight signals $BS_1$-$BS_m$ representing vibration corrected weight values. The combination calculating means 48 receives these vibration corrected weight signals $BS_1$-$BS_m$ and outputs an open signal OS to those of the hopper gate drivers $68_1$-$68_m$ corresponding to selected ones of the load sensors $41_1$-$41_m$ by the combinational calculations, causing weighed objects to be discharged from the corresponding ones of the weigh hoppers $65_1$-$65_m$ to the collector chute 69. This allows the cutoff frequencies of the filters $46_1$-$46_m$ to be set relatively high and reduces the time required for the combinational calculations. The method of calculating the vertical displacements was already explained above with reference to the weighing machine according to the first comparative example and hence will not be repeated here.

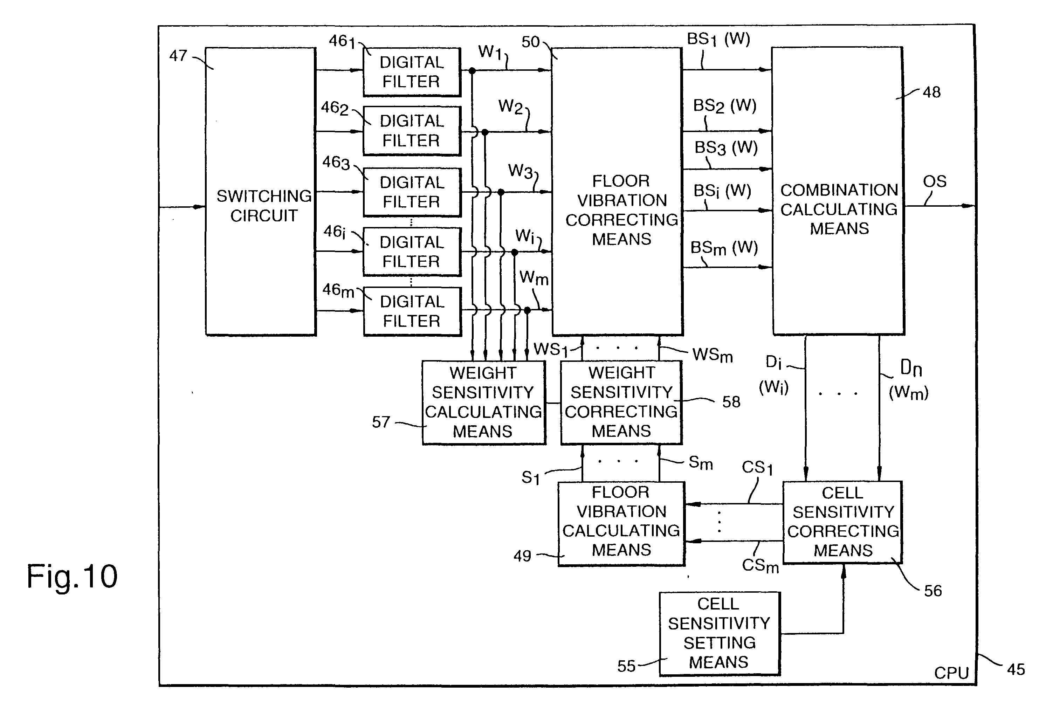

Fig. 10 shows the structure of another CPU 45' which may be substituted for the CPU 45 shown in Fig. 9, being different therefrom in the following two aspects. Firstly, the CPU 45' additionally includes a call sensitivity setting means 55 and a call sensitivity correcting means 56. The cell sensitivity setting means 55 serves to preliminarily set a cell sensitivity ratio among the scale cells $67_1$-$67_m$ on the basis of the spring constant of the scale cells $67_1$-$67_m$ and the loads on the scale cells $67_1$-$67_m$ when no objects to be weighed are in the corresponding weigh hoppers $66_i$-$66_m$. The cell sensitivity correcting means 56 is for using the cell sensitivity ratio set by the cell sensitivity setting means 55 to thereby correct the dummy signals $D_i$-$D_m$ and generating cell sensitivity corrected signals $CS_i$-$CS_n$. Secondly, there are further provided a weight sensitivity calculating means 57 and a weight sensitivity correcting means 58, which are for correcting the changes in sensitivity to the floor vibrations due to changes in the applied load. The functions of these additional means, as well as the correction formulas used thereby, have been described above with reference to Fig. 5 except the dummy signals $D_i$-$D_m$ according to this embodiment of the invention are not from cells specifically designated as dummy cells but from those of the scale cells which were not selected in the preceding cycle of combinational calculations. Thus, they will not be described here repeatedly. It now goes without saying that any of the cells can serve both as a scale cell and a dummy cell and that $\omega_1 = \omega_0$ in such a situation.

Advantages of using digital filters (as opposed to analog filters) have also been discussed above with reference to Figs. 2 and 5. If analog filters are to be used instead of, or in addition to, the digital filters $46_1$-$46_m$ in connection with the second comparative example, such analog filters are connected at 49 in Fig. 8.

It is to be reminded that the disclosure given above for the second comparative example can be applied also to combinational weighing machines having weighing units arranged linearly, instead of in a circular formation.

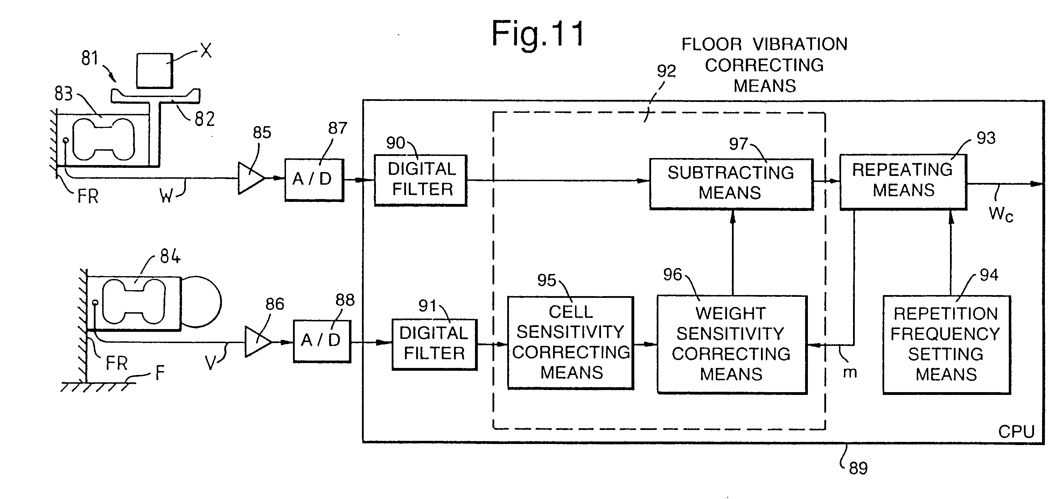

Another signal processing system according to a third comparative example described next with reference to Fig. 11. For simplicity, this signal processing system is described as applied not to a combinational weighing machine with a plurality of weighing units but only to a combination of one weighing unit 81 having a weigh hopper 82 and a scale call 83 and a vibration-detecting cell 84 which may be an equivalent of a dummy cell shown in Pig. 1 or one of the scale cells shown in Fig. 8 not selected in the preceding cycle of combinational calculations. In other words, this signal processing system described in Fig. 11 may be interpreted as being applied to a part of a combinational weighing machine.

When an object X to be weighed is placed inside the weigh hopper 82, the scale cell 83 outputs an analog weight signal W. The vibration-detecting cell 84 is attached through a frame FR to the same floor F as the scale cell 83 and is adapted to output an analog floor vibration signal V indicative of the vibratory motion of the floor F. The signals W and V from these two cells 83 and 84 are amplified by amplifiers 85 and 86 and converted into digital signals by means of analog-to-digital (A/D) converters 87 and 88, respectively. The digitalized weight and floor vibration signals W and V are received by a CPU 89 provided with digital filters 90 and 91 for removing therefrom high-frequency vibration components introduced mainly when the object X is loaded, a floor vibration correcting means 92 for removing the digital floor vibration signal V from the digital weight signal W, a repeating means 93 to be described below and a repetition frequency setting means 94 for setting the number of repetitions for the repeating means 93. The floor vibration correcting means 92 includes a cell sensitivity correcting means 95 for correcting the sensitivity difference of the cells 83 and 84 with respect to the floor vibrations by adjusting the signal level of the floor vibration signal V, a weight sensitivity correcting means 96 for correcting the sensitivity of the scale cell 83 caused by the application of the load due to the object X, and a subtracting means 97 for subtracting the digital floor vibration signal V from the digital weight signal W to thereby output a vibration-corrected weight signal W indicative of the weight (as mass) m of the object X with the effects of the floor vibrations removed. The call sensitivity correcting means 95 and the weight sensitivity correcting means 96 may alternatively be adapted to adjust the signal level of the digital weight signal W to correct the sensitivity difference of the cells 83 and 84 with respect to the floor vibrations or that against changes in the load applied thereon.

The repeating means 93 is for inputting into the weight sensitivity correcting means 96 the weight m of the object X outputted from the subtracting means 97 and causing the weight sensitivity correction of the scale cell 83 repeated by the number of times specified by the repetition frequency setting means 94 (say, twice).

Next will be explained the method of correcting the effect of floor vibrations by using the floor vibration correcting means 92 structured as described above. As the object X is placed inside the weigh hopper 82, the analog weight signal W outputted from the scale cell 83 indicative of the weight of the object X is amplified by the amplifier 85 and then passed through the A/D converter 87 to be converted into a digital signal. Subsequently, this digital weight signal w is received by the CPU 89, passed through the digital filter 90 to have relatively high-frequency vibration components removed therefrom and inputted into the floor vibration correcting means 92. At the same time, the analog floor vibration signal V outputted from the vibration-detecting cell 84 is amplified by the amplifier 86 and then converted into a digital signal by passing through the A/D converter 88. This digital floor vibration signal is inputted into the CPU 89, passed through the digital filter 91 and inputted into the floor vibration correcting means 92 after relatively high-frequency vibration components are removed.

Of the signals W and V thus inputted into the floor vibration correcting means 92, the digital floor vibration signal V has its level adjusted by the cell sensitivity correcting means 95 and the sensitivity difference of the cells 83 and 84 with respect to the floor vibrations is corrected. Next, the weight sensitivity correcting means 96 serves to correct, on the basis of the digital weight signal W, the sensitivity difference of the cells 83 and 84 due to application of the weight of the object X. Finally, the sensitivity corrected digital floor vibration signal V is subtracted by the subtracting means 97 from the digital weight signal W to thereby generate and output a vibration corrected signal W indicative of the mass m of the object X. The corrected weight signal $W_c(t)$ thus obtained by the operation of the floor vibration correcting means 92 can be expressed as follows:

$$W_c(t) = W(t) - \kappa\{(M + m)/M\}V(t) \tag{20}$$

where $W(t)$ is the output from the scale cell (weight signal) before the correction, $\kappa$ is the sensitivity ratio between the cells, M is the initial load on the scale cell, and m is the weight of the object to be weighed. In the above, the factor $(M + m)/M$ represents the weight sensitivity ratio between the cells 83 and 84.

As is clear from (20), the scale cell 83 is subjected not only to its initial load M but also to the weight m of the object X, but the vibration-detecting cell 84 is not subjected to such an additional load. When the object X is loaded, therefore, the sensitivity against the floor vibrations becomes $(M + m)/M$ times greater for the scale cell 83 as compared to the vibration-detecting cell 84. In other words, a correction due to the mass m of the object X becomes desirable.

The mass m, however, is not of a preliminarily known value but is a target value to be determined. In other words, its value is not determined at the time of the correction operations. Thus, the weight sensitivity of the scale cell 83 is not corrected at once, but by a feedback process whereby the vibration component V is first detected by the vibration-datecting cell 84, the corrected weight signal $W_c(t)$ is calculated by the floor vibration correcting means 92 by (20) and the corrected weight signal $W_c(t)$ thus obtained is then fad back into the weight sensitivity correcting means 96. This feedback process is repeated by the repetition number set by the repetition frequency setting means 94, such as twice, to improve the accuracy of weight sensitivity correction.

Although the cell sensitivity correcting means 95 is provided in the example described above with reference to Fig. 11, it may be omitted if the cell sensitivity difference between the two cells 83 and 84 is negligibly small. Although Fig. 11 shows an embodiment with one scale cell and one vibration-detecting call, this embodiment is applicable equally well to a situation with one or more scale cells and a plurality of vibration-detection cells such that the vibration mode of the floor is determined on the basis of the vibration components of the floor detected by the vibration-detection calls to calculate the vertical displacements of the floor at the position of each of the scale cells.

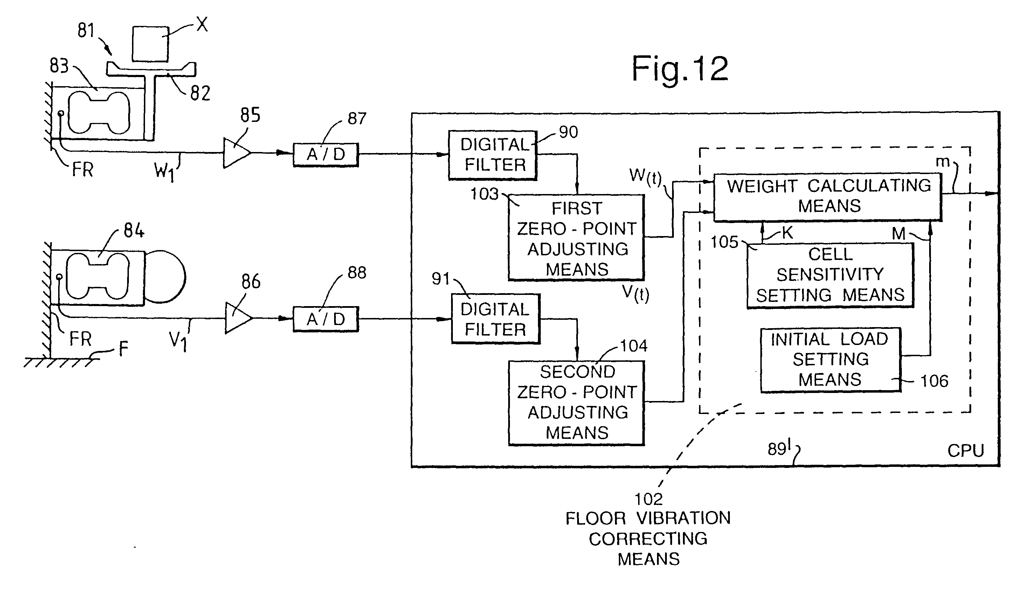

Fig. 12 is a block diagram of still another signal processing system according to a fourth comparative example which is similar in part to the system described above with reference to Fig. 11. So, the components therein which are substantially identical to corresponding ones shown in Fig. 11 are indicated by the same numerals and will not be explained again in detail.

The CPU 89' for the system shown in Fig. 12 is different from the CPU 89 of Fig. 11 firstly in that it includes a first zero-point adjusting means 103 and a second zero-point adjusting means 104 for carrying out a zero-point adjustment respectively on the weight signal W and the floor vibration signal V digitalized by the digital filters 90 and 91 and outputting weight component W(t) corresponding to the weight m of the object X and floor vibration component V(t) corresponding to the floor vibrations. These components W(t) and v(t) are received by a floor vibration correcting means 102 for correcting the floor vibration component according to a formula to be described below to thereby output the mass m of the object X.

The first zero-point adjusting means 103 is for detecting the weight signal level when the weight m of the object X is not being applied, either during a specially set zero-detecting time period before the day's weighing operation is started or during a regular weighing operation, storing it as the zero-level and subtracting this zero-level from the weight signal W outputted from the scale cell 83 loaded with the object X to thereby obtain a zero-adjusted weight signal, that is, the weight component W(t) corresponding to the weight m of the object X. The second zero-point adjusting means 104 is for passing the floor vibration signal V outputted from the vibration-detecting cell 84 during such a specially set zero-detecting time period through a strong filter, storing its output as the zero-level, and subtracting this zero-level from the floor vibration signal V to thereby obtain a zero-adjusted floor vibration signal, or the vibration component V(t) corresponding to the floor vibrations.

The floor vibration correcting means 102 includes a cell sensitivity setting means 105, an initial load setting means 106 and a weight calculating means 107. The cell sensitivity setting means 105 is for setting the sensitivity ratio $\kappa$ between the scale cell 83 when it is not loaded with any object and the vibration-detecting cell 84. The initial load setting means 106 is for setting the initial load K on the scale cell 83 when it is not loaded with any object. The weight calculating means 107 is for using the cell sensitivity ratio $\kappa$ set in the cell sensitivity setting means 105 and the initial load M stored in the initial load setting means 106 to calculate the mass m of the object X. The sensitivity ratio $\kappa$ and the initial load M are characteristic to the weighing machine and hence of known values.

The formula used by the weight calculating means 107 to calculate the weight (as mass) m of the object X is obtained by setting the left-hand side of (20) equal to m. This is because, as (20) is used repeatedly by initially setting m equal to an appropriate initial value, the left-hand side of (20), or the corrected value $W_c(t)$, eventually approaches the value to be treated as m. Thus,

$$m = W(t) - \kappa\{(M + m)/M\}V(t)$$

$$= W(t) - \kappa V(t) - (\kappa/M)mV(t)$$

or

$$\{1 + (\kappa/M)V(t)\}m = W(t) - \kappa V(t)$$

Thus,

$$m = \{W(t) - \kappa V(t)\}/\{1 + (\kappa/M)V(t)\} \qquad (21)$$

where, as explained above, W(t) is the output from the scale cell after the zero-point adjustment (or weight component) and V(t) is the floor vibration component.

Next, the method of floor vibration correction by a system thus structured will be explained. First, the digital weight signal W before the object X is placed in the weigh hopper 82 (for example, during a specially set zero-detecting time period before the day's continuous weighing operation is started or even during a regular weighing operation) is inputted into the first zero-point adjusting means 103 and its signal level is detected and stored as the zero-level. At the same time, the digital vibration detecting signal V outputted from the vibration-detecting call 84 is inputted into the second zero-point adjusting means 104 so as to be passed through a strong filter therein. The output therefrom is stored as the zero-level. Next, the sensitivity ratio $\kappa$ between the scale cell 83 when it is not loaded with any object and the vibration-detecting cell 84 is inputted into and stored in the cell sensitivity setting means 105. At the same time, the initial load M of the scale cell 83 when it is not loaded with any object is inputted into and stored in the initial load setting means 106.

If a weighing operation is started thereafter, an object X to be weighed is received by the weigh hopper 82, and the analog weight signal outputted from the scale cell 83 is amplified by the amplifier 85 and converted by the A/D converted 87 into a digital weight signal W. This digital weight signal is then inputted into the CPU 89' and, after its relatively high-frequency vibration components are removed by the digital filter 90, is passed through the first zero-point adjusting means 103. The weight component W(t) corresponding to the weight m of the object X after the zero-point adjustment is then inputted into the weight calculating means 107 of the floor vibration correcting means 102.

At the same time, the analog floor vibration signal V outputted from the vibration-detecting cell 84 is amplified by the amplifier 86 and then converted into a digital floor vibration signal by the A/D converter 88. This digital floor vibration signal is inputted into the CPU 89' and, after its relatively high-frequency vibration components are removed by the digital filter 91, is passed through the second zero-point adjusting means 104 to be inputted into the weight calculating means 107 as the floor vibration component V(t) after a zero-point adjustment. The weight calculating means 107 thereupon uses the earlier inputted values of the cell sensitivity ratio $\kappa$ and the initial load M on the scale cell 83 to perform the calculation according to (21) to output the value of the weight m of the object X.

This embodiment is advantageous in that the mass m of a loaded object X can be immediately calculated by a formula by using preliminarily inputted values of the initial load M and the sensitivity ratio $\kappa$ such that no time-consuming feedback process of ropeating weight sensitivity correction is required. In other words, this embodiment makes it possible to carry out accurate weighing quickly by performing a weight value calculation only once by using preliminarily inputted constant values.

Although Fig. 12 shows an example with one scale cell and one vibration-detecting cell, this embodiment too, is applicable equally well to situations with one or more scale cells and a plurality of vibration-detection cells such that the vibration mode of the floor is determined on the basis of the vibration components of the floor detected by the vibration-detection cells to calculate the vertical displacements of the floor at the position of each of the scale cells.

The CPUs such as shown in Fig. 2 at 9 and in Fig. 9 at 45, may be provided also with another set of stronger filters with a very low cutoff frequency and a long stabilizing time in addition to ordinary filters. Such filters are highly efficient but do not stabilize within the period of the weighing cycle. For this reason, automatic switches may be further provided such that vibration corrected data will be used as output signals if they participate in combinational calculations continuously but the data filtered through these additional filters will be used as output signals if they do not participate in combinational calculations continuously and the filters are given enough time to stabilize.

With reference to Fig. 13, which shows a CPU $9_2$ according to a first embodiment of the invention, digital filters (of a first kind) $10_1$-$10_m$ and $11_1$-$11_n$ are adapted to receive digitalized weight signals $W_1$-$W_m$ and dummy signals $D_1$-$D_n$ sequentially as explained above through a switching circuit 12, and the vibration components with relatively high frequencies are thereby eliminated. Numeral 115 indicates a correction circuit consisting essentially of a floor vibration calculating means 13 and floor vibration correcting means $14_1$-$14_m$ as explained above with reference to Fig. 2. Numerals $116_1$-$116_m$ indicate a set of filters (of a second kind) characterized as having a relatively low cutoff frequency for eliminating the low-frequency vibration components of the floor, each connected in parallel to corresponding one of the floor vibration correcting means $14_1$-$14_m$ so as to receive the weight signals $W_1$-$W_m$ and output signals $FW_1 \cdot FW_m$ with the vibration components of the floor removed.

Correction control means $120_1$-$120_m$, individually associated with the floor vibration correcting means $14_1$-$14_m$, include component detecting means $121_1$-$121_m$, reference value setting means $122_1$-$122_m$ and comparing means $123_1$-$123_m$, in addition to the aforementioned digital filters of the second kind $116_1$-$116_m$. The component detecting means $121_1$-$121_m$ serve to compare the digital weight signals $W_1$-$W_m$ before they are passed though the digital filters of the second kind $116_1$-$116_m$ and the corrected weight signals $FW_1$-$FW_m$ after they have passed therethrough to thereby determine the vibration components of the floor. The reference value setting means $122_1$-$122_m$ are for setting and inputting reference values $RafH_1$-$RefH_m$ for the amplitudes of the vibration components of the floor. The comparing means $123_1$-$123_m$ are for comparing the amplitudes $H_1$-$H_m$ of the floor vibration components obtained by the component detecting means $121_1$-$121_m$ with the inputted reference values $RefH_1$-$RefH_m$. The comparing means $123_1$-$123_m$ is adapted to carry out the comparison operations only during a preset time interval in response to a command signal $C_1$

outputted from a command means 119.

The corrsction control means $120_1$-$120_m$ serve to stop the operations of the floor vibration correcting means $14_1$-$14_m$ in response to stop signals $ST_1$-$ST_m$ outputted from the comparing means $123_1$-$123_m$ when $H_1 \leq RefH_1$, ... or $H_m \leq RefH_m$, and to operate the floor vibration correcting means $14_1$-$14_m$ in response to correction drive signals $DR_1$-$DR_m$ from the comparing means $123_1$-$123_m$ when the amplitudes $H_1$-$H_m$ are respectively greater than the reference values $RefH_1$-$RefH_m$. The operations of these component detecting means $121_1$-$121_m$ will be explained next with reference to one of them ($121_1$).

The command means 119 is adapted to output the command signal $C_1$ at a preset time when decision is to be made whether floor vibration correction must be carried out. Such tims may be set some time before the beginning of the daily weighing operation. If the command signal $C_1$ is received, the associated comparing means $123_1$ is activated and outputs a stop signal $ST_1$ to the correction circuit 115 to atop the operation of the corresponding floor vibration correcting means $14_1$ if any, all cr the averaqe of the amplitudes $H_1$ detected during the specified time la less than the reference value $RefH_1$.

The CPU $9_2$ is also provided with manually operated selection switches $127_1$-$127_m$ for selectably allowing or not allowing the stop and drive signals $ST_1$-$ST_m$ and $DR_1$-$DR_m$ from the comparing means $123_1$-$123_m$ of the correction control means $120_1$-$120_m$ to be transmitted to the floor vibration correcting means $14_1$-$14_m$ of the correction circuit 115. In other words, these selection switches $127_1$-$127_m$ allow the user to manually change the mode of control of the correction circuit 115 by the correction control means $120_1$-$120_m$, in response to the condition of the weighing operations or a change in environmental conditions. For example, the selection switches $127_1$-$127_m$ may be set in ON conditions to allow the stop and drive signals $ST_1$-$ST_m$ and $DR_1$-$DR_m$ to pass therethrough but, when it is known that a vibration-causing operation is going to take place, the user may manually set the selection switches $127_1$-$127_m$ in OFF conditions to disallow the signals $ST_1$-$ST_m$ and $DR_1$-$DR_m$ to pass therethrough and to atop the operations of the floor vibration correcting means $14_1$-$14_m$ such that the weight signals $W_1$-$W_m$ from the first digital filters $10_1$-$10_m$ are directly inputted to the combination calculating means 20. As another example, the user can cause the floor vibration correcting means $14_1$-$14_m$ to operate all the time independent of the magnitude of the floor vibrations also by preventing the signals $ST_1$-$ST_m$ and $DR_1$-$DR_m$ from passing through the selection switches $127_1$-$127_m$.

In summary, the weight signals $W_1$-$W_m$ are inputted to the stronger digital filters (of the second kind) $116_1$-$116_m$ which allow the component detecting means $121_1$-$121_m$ to determine the vibration components of the floor. The comparing means $123_1$-$123_m$ of the correction control means $120_1$-$120_m$ compare the amplitudes $H_1$-$H_m$ of these vibration components with the reference values $RefH_1$-$RefH_m$ in response to the command signal $C_1$ from the command means 119 such that the operations of the correction circuit 115 can be stopped, depending on the results of comparison therebetween according to any preset criterion such that the weight signals $W_1$-$W_m$ are directly inputted to the combination calculating means 20. Thus, if the amplitudes of the floor vibration components are small, errors due to difference in sensitivity between the scale cells $3_1$-$3_m$ and the dummy cells $4_1$-$4_n$, quantization errors when analog-to-digital conversion is carried out, and weighing errors due to rounding off, for example, can be eliminated by using the weight signals $W_1$-$W_m$ directly.

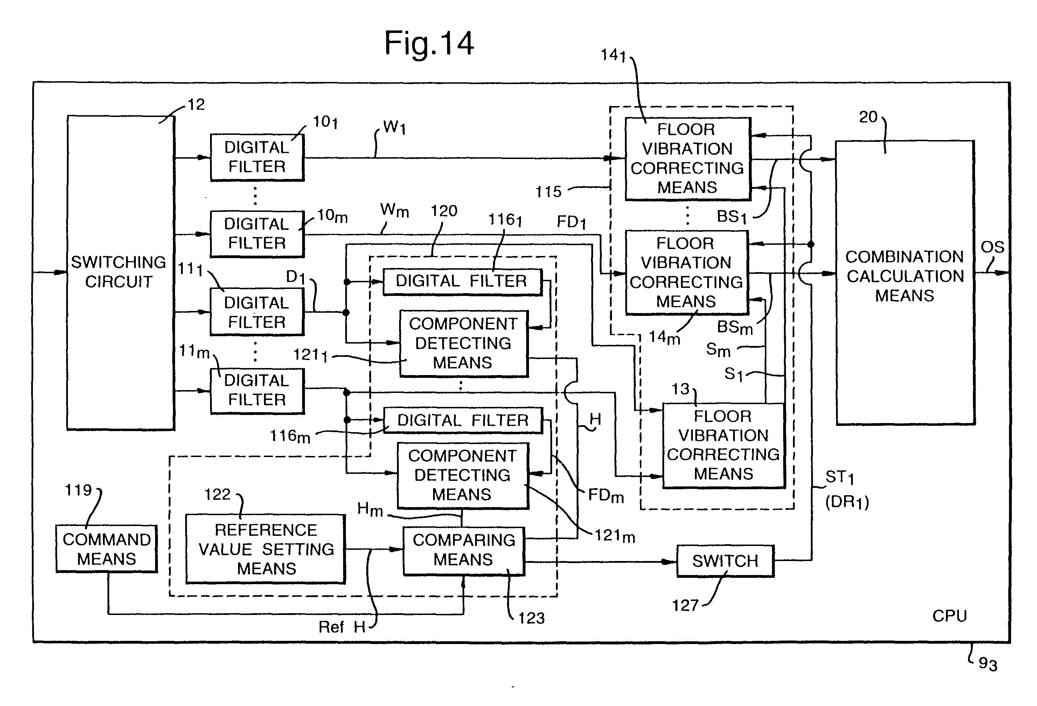

Fig. 14 shows still another CPU $9_3$, which is similar to the one described above with reference to Fig. 13 and shown at $9_2$ therein, being different therefrom firstly in that a single correction control means 120 (instead of the plurality of correction control means $120_1$-$120_m$ of Fig. 13) is connected to the output side of the digital filters $11_1$-$11_n$ so as to receive the digital dummy signals $D_1$-$D_n$ therefrom and secondly in that this single control correction control means 120 is provided with a single comparing means 123. The single correction control means 120 includes n-number of stronger digital filters (of the second kind) $116_1$-$116_n$ and component detecting means $121_1$-$121_n$, as do the correction control means $120_1$-$120_m$ of Fig. 13 together, such that the dummy signals $D_1$-$D_n$ as outputted from the digital filters $11_1$-$11_n$ and the corrected dummy signals $FD_1$-$FD_n$ after they have passed through the digital filters of the second kind $116_1$-$116_n$ are compared and the vibration components of the floor are thereby determined. The amplitudes $H_1$-$H_n$ of these vibration components determined by the component detecting means $121_1$-$121_n$ are received by the single comparing means 123, which is activated during a specified period of time (as the comparing means $123_1$-$123_m$ of the correction control means $120_1$-$120_m$ of Fig. 13 are activated by the command signal $C_1$ as explained above), and compared thereby with a single reference value RefH set inside a reference value setting means 122. The comparing means 123 is programmed to compare the reference value RefH with either the maximum or the minimum of the amplitudes $H_1$-$H_n$ and output a stop signal ST1 or a drive signal DR1 accordingly, as explained above with reference to Fig. 13. In other respects, the CPU $9_3$ shown in Fig. 14 is identical to the CPU $9_2$ in Fig. 13, and those components which are identical or equivalent to each other are indicated by the same numerals. It goes without saying that the CPU $9_3$ of Fig. 14 may also be provided with a command means as indicated at 119 in Fig. 13 such that the time for activation of the single comparing means 123 can be controlled by outputting a command signal.

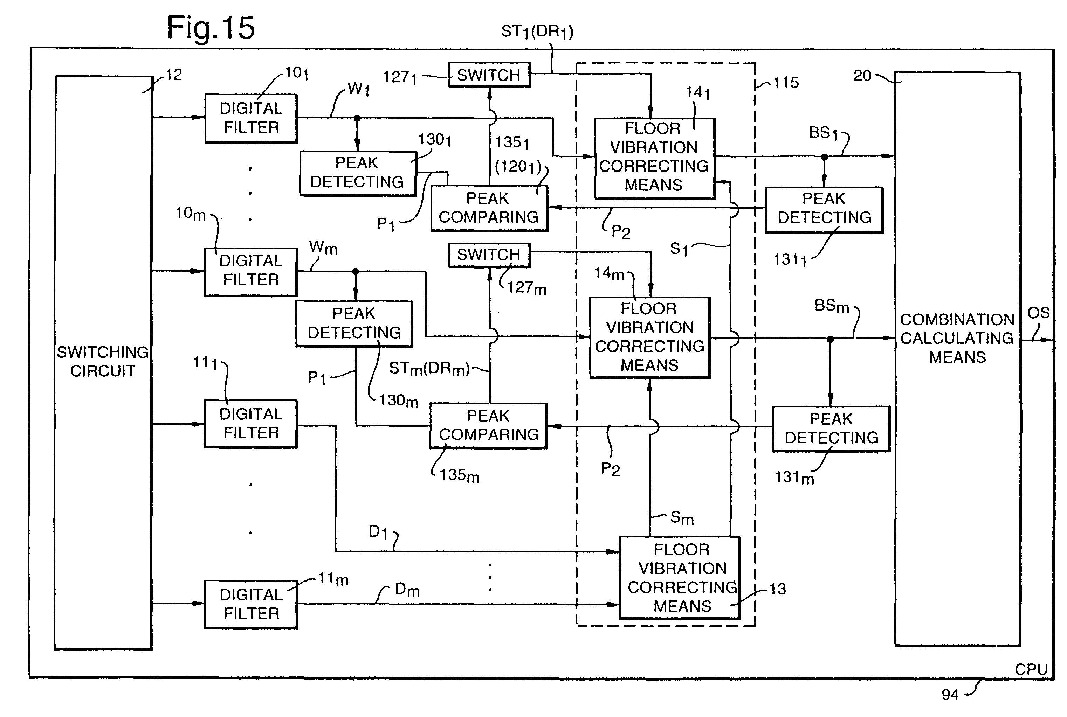

Fig. 15 shows still another CPU $9_4$, which may be viewed as another variation of the CPU $9_2$ shown in Fig. 13, characterized as including peak detecting means of a first kind $130_1$-$130_m$ for detecting peak value $P_1$ of the digital weight signals $W_1$-$W_m$ outputted from the scale cells $3_1$-$3_m$ and peak detecting means of a second kind $131_1$-$131_m$ for

detecting (second) peak value $P_2$ of the vibration corrected weight signals $BS_1$-$BS_m$ outputted from the floor vibration correcting means $14_1$-$14_m$ of the correction circuit 115. There are also included peak value comparing means $135_1$-$135_m$ for using these second peak value $P_2$ as a reference value and comparing the first peak value $P_1$ therewith. Neither the digital filters of the second kind $116_1$-$116_n$ nor the command means 119 shown in Fig. 13 find their equivalents in the CPU $9_4$, although a command means may be included such that the peak value comparing means $135_1$-$135_m$ may be activated only during a specified time interval.

The peak value comparing means $135_1$-$135_m$ may be programmed to output a stop signal ST1 to the correction circuit 115 to stop the operations of the corresponding floor vibration correcting means $14_1$-$14_m$ if any of the (first) peak values $P_1$ detected during a predetermined tine interval is less than the reference peak value $P_2$ ("minimum" condition), if all of such first peak values $P_1$ are less than the reference value $P_2$ ("maximum" condition), or if the average of them is less than the reference value $P_2$. The advantage of this CPU $9_4$ is that the operation of any of the floor vibration correcting means $14_1$-$14_m$ is stopped if its corresponding first peak value $P_1$ is less (whether in the sense of "minimum", "maximum" or average as explained above) than a predetermined reference value (represented by the second peak value $P_2$) so as to reduce the errors which may be generated due to vibration corrections. In other respects, Fig. 15 is identical to Fig. 13 and those components which are identical or equivalent to each other are indicated by the same numerals.

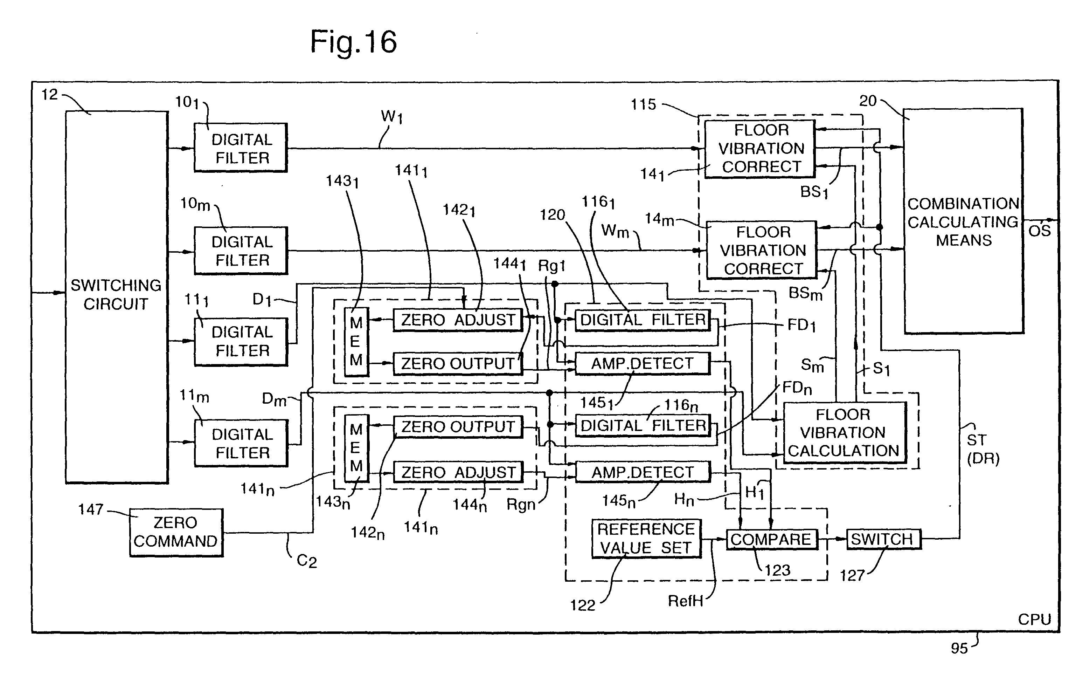

Fig. 16 shows still another CPU 95 adapted to stop or continue the operations of its correction circuit 115, depending on the magnitudes of the amplitudes of the dummy signals $D_1$-$D_n$. As shown in Fig. 16, digital filters of the second kind $116_1$-$116_n$ are adapted to receive the dummy signals $D_1$-$D_n$, to remove therefrom the vibration components of the floor and to thereby output vibration corrected DC dummy signals $FD_1$-$FD_n$ to zero point adjusting means $142_1$-$142_n$ of zero point adjusting setting units $141_1$-$141_n$. These inputted signals $FD_1$-$FD_n$ are stored in memory devices (MEM) $143_1$-$143_n$ as zero points, and zero point signals $Rz_1$-$Rz_n$ indicative of the zero points are outputted from zero point outputting means $144_1$-$144_n$.

There is a zero point adjustment command means 147 adapted to output a command signal $C_2$ at a preset timing during a weighing operation, say, every 30 minutes. When the zero point adjusting means $142_1$-$142_n$ raceive the command signal $C_2$, they accept the DC dummy signals $FD_1$-$FD_n$ for a predetermined length of time such as 10 seconds, thereby adjusting the zero points on the basis of these signals $FD_1$-$FD_n$, say, from their average values. If zero points are already known, a simple means for outputting a zero point may be used in place of the zero point adjusting setting units $141_1$-$141_n$.

The dummy signals $D_1$-$D_n$ are also inputted into amplitude detecting means $145_1$-$145_n$, which are adapted to detect the amplitudes $H_1$-$H_n$ of the dummy signals $D_1$-$D_n$ on the basis of the differences between the dummy signals $D_1$-$D_n$ and the zero point signals $Rz_1$-$Rz_n$ received from the zero point outputting means $144_1$-$144_n$. The amplitudes $H_1$-$H_n$ thus detected by the amplitude detecting means $145_1$-$145_n$ are received by a comparing means 123 and compared thereby with a reference amplitude value RefH set in a reference value setting means 122. The comparing means 123 outputs a atop signal ST to the correction circuit 115 if any of the detected amplitudes $H_1$-$H_n$ is smaller than the reference amplitude value RefH (minimum condition), if all of the detected amplitudes $H_1$-$H_n$ are smaller than the reference amplitude value RefH (maximum condition), or if the average of the detected amplitudes $H_1$-$H_n$ is smaller than the reference amplitude value RefH.

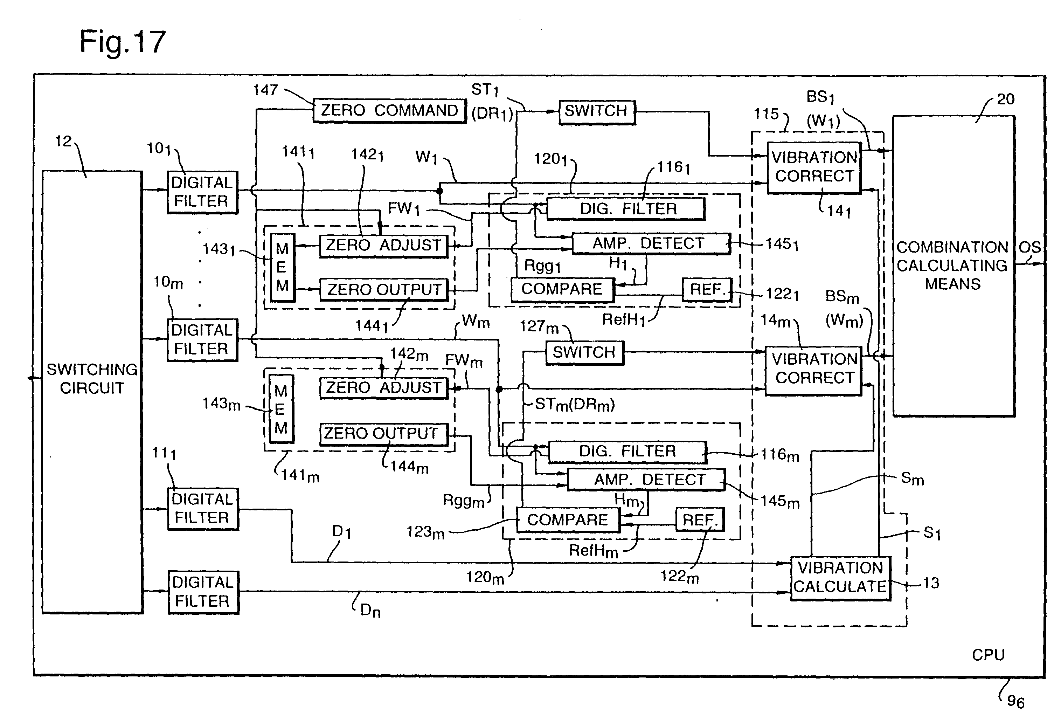

Fig. 17 shows still another CPU $9_6$ adapted to stop or continue the operations of its correction circuit 115, but depending on the magnitudes of the amplitudes of the digital weight signals $W_1$-$W_m$ outputted from the scale cells $3_1$-$3_m$, rather than of the dummy signals $D_1$-$D_n$, and provided with a plurality of correction control means $120_1$-$120_m$ corresponding individually to the m-number of load sensors $1_1$-$1_m$ (Fig. 1). The zero point adjustment command means 147 is adapted to output a command signal $C_2$ at preset times when the scale cells $3_1$-$3_m$ are in unloaded conditions such as every morning before the daily weighing operation is started. When the command signal $C_2$ is received, zero point adjusting setting units $141_1$-$141_m$, individually corresponding to the load sensors $1_1$-$1_m$, are activated for a specified length of time, during which digital weight signals $W_1$-$W_m$, while the load sensors $1_1$-$1_m$ are in unloaded conditions, are passed through strong digital filters of the second kind $116_1$-$116_m$ and corrected DC weight signals $FW_1$-$FW_m$ are received by zero point adjusting means $142_1$-$142_n$. Zero points are thereby determined, say, from the average of these weight signals $W_1$-$W_m$, and stored in memory devices (MEM) $143_1$-$143_m$. Zero point outputting means $144_1$-$144_m$ serve to output zero point signals $Rzz_1$-$Rzz_m$ indicative of these zero points when weight signals $W_1$-$W_m$ are outputted subsequently when the load sensors $1_1$-$1_m$ are in loaded conditions. In situations where zero points are already known, a simple means for outputting a zero point may be used in place of zero point adjusting setting units $141_1$-$141_m$, as explained above with reference to Fig. 16.

Amplitude detecting means $145_1$-$145_m$ are adapted to detect the amplitudes $H_1$-$H_m$ of the weight signals $W_1$-$W_m$ on the basis of the differences between the weight signals $W_1$-$W_m$ under the no-load conditions and the zero point signals $Rzz_1$-$Rzz_m$ received from zero point outputting means $144_1$-$144_m$. The amplitudes $H_1$-$H_m$ thus detected by the amplitude detecting means $145_1$-$145_m$ are received by comparing means $123_1$-$123_m$ and compared thereby with reference amplitude values $RefH_1$-$RefH_m$ set in reference value setting means $122_1$-$122_m$. The comparing means $123_1$-

$123_m$ output stop signals $ST_1$-$ST_m$ to the correction circuit 115 in the same manner as explained above with reference to Fig. 13.

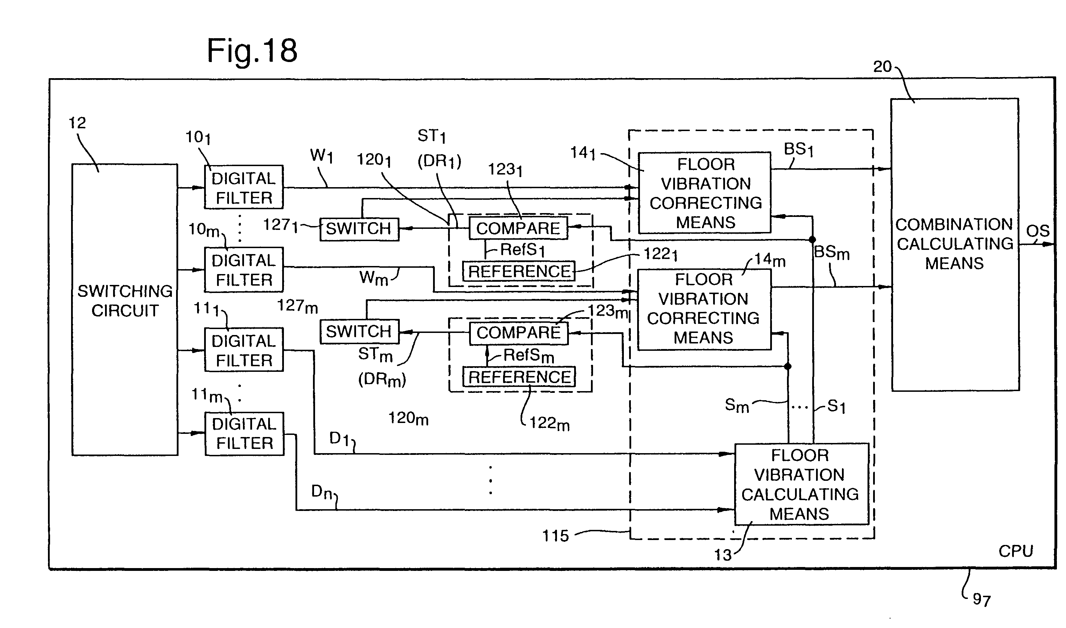

Throughout herein, it is to be understood that only representative embodiments are being described. Many of the features can be mixed or interchanged. In the CPU $9_5$ shown in Fig. 16, for example, a plurality of correction control means corresponding individually to the n-number of dummy cells $4_1$-$4_n$ may be provided as shown in Fig. 17. In the CPU $9_6$ shown in Fig. 17, as another example, a single correction control means may be provided in common for all load sensors $1_1$-$1_m$ (Fig. 1). Although the correction circuit 115, in all of the embodiments described above, is controlled by correction control means 120 for detecting vibration components contained in weight signals $W_1$-$W_m$ or dummy signals $D_1$-$D_n$, displacement signals $S_1$-$S_m$ representing the vertical motion of the floor may be used to determine whether floor vibration corrections are necessary or not, as shown in Fig. 18.

Fig. 18 shows such a CPU $9_7$. The CPU $9_7$ according to this embodiment includes a floor vibration calculating means 13 adapted to calculate the vibration mode of the floor from the vibration components of the dummy signals $D_1$-$D_n$ and to output displacement signals $S_1$-$S_m$ indicative of the vertical displacaments of the floor at the positions of the scale cells $3_1$-$3_m$. The CPU $9_7$ also includes m-number of comparing means $123_1$-$123_m$ corresponding to the m-number of scale cells $3_1$-$3_m$. These comparing means $123_1$-$123_m$ are adapted to receive the displacement signals $S_1$-$S_m$ outputted from the floor vibration calculating means 13 and to compare them with reference values $RefS_1 \cdot RetS_m$ stored in reference value setting means $122_1$-$122_m$, outputting stop signals $ST_1$-$ST_m$ to the floor vibration correcting means $14_1$-$14_m$ if the level of the displacement signals $S_1$-$S_m$ is lower than that of the reference values $RefS_1$-$RefS_m$ and drive signals $DR_1$-$DR_m$ if other wise.

With the CPU $9_7$ thus formed, the floor vibration calculating means 13 can calculate the effects of floor vibrations on the scale cells $3_1$-$J_m$ accurately even where the dummy signals $D_1$-$D_n$ outputted from the dummy cells $4_1$-$4_m$ do not accurately represent the effects of the floor vibrations on the scale cells $3_1$-$3_m$ because, for example, the scale and dummy cells $3_1$-$3_m$, $4_1$-$4_m$ are positioned differently. In other words, the CPU $9_7$ as shown in Fig. 18 can stop and activate the correction circuit 115 more appropriately according to the motion of the individual scale cells $3_1$-$3_m$.

The invention was described above with reference to embodiments adapted to correct weight signals from individual scale cells on the basis of outputs from dummy cells, but such dummy cells may be in the form of a simple vibration detector placed near each of the scale cells. In such a case, the correcting circuit may be of a simple structure merely for the purpose of subtracting the vibration component from the weight signal. It is also to be noted that the manually operable selection switches $127_1$-$127_m$ may be replaced by automatic switches adapted to function periodically or the correction control means 120 may be additionally adapted to control the operation of the correction circuit 115.

## Claims

1. A weighing machine comprising:

   a scale cell for weighing an object and outputting a weight signal indicative of a measured weight value of said object;
   a vibration-detecting cell set on a same floor as said scale cell for outputting a floor vibration signal indicative of the vibration of said floor;
   correcting means (14) for correcting said weight signal on the basis of said floor vibration signal outputted from said vibration-detecting cell and thereby generating a vibration corrected signal indicative of a corrected weight value of said object not containing effects of said vibration of said floor; and
   correction control means (120) for detecting vibration components of said floor and stopping operations of said correcting means by comparing said vibration components with a reference value.

2. The weighing machine of claim 1, wherein said correction control means includes:

   a filter which is connected to said scale cell in parallel with said correcting means so as to receive said weight signal from said scale cell; and
   vibration component detecting means for comparing said weight signal before and after passing through said filter and thereby detecting vibration components of said floor;
   said weighing machine further comprising command means for causing a comparison to be made between said vibration components and said reference value during a preset comparison time interval.

3. The weighing machine of claim 1, wherein said correction control means includes:

a filter which is connected to said vibration-detecting cell in parallel with said correcting means so as to receive said floor vibration signal from said vibration detecting cell; and

vibration component detecting means for comparing said weight signal before and after passing through said filter and thereby detecting vibration components of said floor;

said weighing machine further comprising command means for causing a comparison to be made between said vibration components and said reference value during a preset comparison time interval.

4. The weighing machine of claim 1, further comprising:

first peak detecting means for detecting peaks in said weight signal from said scale cell; and

second peak detecting means for detecting peaks in a vibration-corrected signal outputted from said correcting means;

said correction control means including peak comparing means for using a peak detected by said second peak detecting means as said reference value and comparing a peak detected by said first peak detecting means with said reference value.

5. The weighing machine of claim 1, wherein said correction control means includes:

zero-point adjusting means for operating during a specified zero-point adjusting time interval, storing a zero-point level indicated by a zero-point signal obtained by removing said vibration components from said weight signal, and thereby outputting a zero-point signal indicative of said zero-point level; and

amplitude detecting means for detecting the amplitude of said floor vibration signal from the difference between said floor vibration signal and said zero-point signal.

6. The weighing machine of claim 1, wherein said correction control means includes:

zero-point adjusting means for operating during a specified zero-point adjusting time interval, storing a zero-point level indicated by a zero-point signal obtained by removing said vibration components from a no-load weight signal outputted from said scale cell when no load is being applied thereto from any object, and thereby outputting a zero-point signal indicative of said zero-point level; and

amplitude detecting means for detecting the amplitude of said no-load weight signal from the difference between said no-load weight signal and said zero-point signal.

7. The weighing machine of claim 1, wherein said vibration-detecting cell is one of a plurality of similar vibration-detecting cells and said correcting means include:

vibrating calculating means for detecting vibration modes of said floor from vibration components of floor vibration signals outputted from said plurality of vibration-detecting cells and thereby calculating vertical displacement of said floor at the position of said scale cell; and

vibration correcting means for generating a vibration-corrected signal by removing said vibration components from said weight signal by using said vertical displacement;

said correction control means including comparing means for comparing said vertical displacement calculated by said vibration calculating means with said reference value.

**Patentansprüche**

1. Wägegerät, mit:

einer Wägezelle zum Wiegen eines Objekts und zur Ausgabe eines dem gemessenen Gewichtswert des Objekts entsprechenden Gewichtssignals;

einer Schwingungserfassungszelle, die auf den gleichen Boden aufgesetzt ist wie die Wägezelle, um ein den Schwingungen des Bodens entsprechendes Bodenschwingungssignal abzugeben;

einer Korrektureinrichtung (14) zur Korrektur des Gewichtssignals auf der Basis des Bodenschwingungssignals, das von der Schwingungserfassungszelle abgegeben ist, um dadurch ein schwingungskorrigiertes Signal zu erzeugen, das einem korrigierten Gewichtswert des Objekts entspricht und keine Wirkungen der Bodenschwingungen enthält; und

einer Korrektursteuereinrichtung (120) zur Erfassung von Schwingungskomponenten des Bodens und zum Unterbrechen des Betriebs der Korrektureinrichtung durch Vergleich der Schwingungskomponenten mit einem Referenzwert.

**2.** Wägegerät nach Anspruch 1, wobei die Korrektursteuereinrichtung aufweist:

ein Filter, welches mit der Wägezelle parallel mit der Korrektureinrichtung verbunden ist, um das Gewichtssignal von der Wägezelle zu empfangen;
Schwingungskomponentenerfassungseinrichtungen zum Vergleichen des Gewichtssignals vor und nach dem Passieren des Filters, um dadurch Schwingungskomponenten des Bodens zu erfassen;
wobei das Wägegerät ferner Befehlseinrichtungen zum Hervorrufen eines auszuführenden Vergleichs zwischen den Schwingungskomponenten und dem Referenzwert während eines vorbestimmten Vergleichszeitintervalls hat.

**3.** Wägegerät nach Anspruch 1, wobei die Korrektursteuereinrichtung aufweist:

ein Filter, welches parallel mit der Korrektureinrichtung mit der Schwingungserfassungszelle verbunden ist, um das Bodenschwingungssignal von der Schwingungserfassungszelle zu empfangen; und
Schwingungskomponentenerfassungseinrichtungen zum Vergleichen des Bodenschwingungssignals vor und nach dem Passieren durch das Filter, um dadurch Schwingungskomponenten des Bodens zu erfassen;
wobei das Wägegerät ferner Befehlseinrichtungen aufweist, um einen auszuführenden Vergleich zwischen den Schwingungskomponenten und dem Referenzwert während einer vorbestimmten Vergleichszeitspanne hervorzurufen.

**4.** Wägegerät nach Anspruch 1, ferner mit:

ersten Spitzenwerterfassungseinrichtungen zum Erfassen von Spitzenwerten in dem Gewichtssignal von der Wägezelle; und
zweiten Spitzenwerterfassungseinrichtungen zum Erfassen von Spitzenwerten in einem schwingungskorrigierten Signal, das von der Korrektureinrichtung abgegeben ist;
wobei die Korrektursteuereinrichtung Spitzenwertvergleichseinrichtungen zur Verwendung eines von der zweiten Spitzenwerterfassungseinrichtung erfassten Spitzenwert als den Referenzwert und zum Vergleichen eines durch die erste Spitzenwerterfassungseinrichtung erfassten Spitzenwerts mit dem Referenzwert hat.

**5.** Wägegerät nach Anspruch 1, wobei die Korrektursteuereinrichtung aufweist:

Nullpunkteinstelleinrichtungen zum Betrieb während einer vorbestimmten Nullpunkteinstellzeitspanne, zum Speichern eines Nullpunktpegels, der durch ein Nullpunktsignal wiedergegeben ist, das durch Entfernen der Schwingungskomponenten von dem Gewichtssignal erhalten ist, um dadurch ein Nullpunktsignal herauszugeben, das den Nullpunktpegel wiedergibt; und
Amplitudenerfassungseinrichtungen zum Erfassen der Amplitude des Bodenschwingungssignals aus der Differenz zwischen dem Schwingungssignal und dem Nullpunktsignal.

**6.** Wägegerät nach Anspruch 1, wobei die Korrektursteuereinrichtung aufweist;

Nullpunkteinstelleinrichtungen zum Betrieb während einer bestimmten Nullpunkteinstellzeitspanne, zum Speichern eines Nullpunktpegels, der durch ein Nullpunktsignal wiedergegeben ist, das durch Entfernen der Schwingungskomponenten von einem lastfreien Gewichtssignal erhalten ist, das von der Wägezelle abgegeben ist, wenn keine Last durch irgendein Objekt darauf aufgebracht ist, um dadurch ein Nullpunktsignal herauszugeben, das den Nullpunktpegel angibt; und
einer Amplitudenerfassungseinrichtung zum Erfassen der Amplitude des lastfreien Gewichtsignals aus der Differenz zwischen dem lastfreien Gewichtssignal und dem Nullpunktsignal.

**7.** Das Wägegerät nach Anspruch 1, wobei die Schwingungserfassungszelle eine einer Vielzahl gleicher Schwingungserfassungszellen ist und die Korrektureinrichtung aufweist:

eine Schwingungsberechnungseinrichtung zur Erfassung von Schwingungsmodi des Bodens aus Schwingungskomponenten von Bodenschwingungssignalen, die von der Vielzahl von Schwingungserfassungszellen herausgegeben sind, um dadurch die vertikale Verlagerung des Bodens an der Position der Wägezelle zu berechnen; und

eine Schwingungskorrektureinrichtung zur Erzeugung eines schwingungskorrigierten Signals, indem die Schwingungskomponenten von dem Gewichtssignal entfernt werden, indem die vertikale Verlagerung verwendet wird;

wobei die Korrektursteuereinrichtung eine Vergleichseinrichtung aufweist, um die durch die Schwingungsberechnungseinrichtung berechnete vertikale Verlagerung mit dem Referenzwert zu vergleichen.

**Revendications**

1. Machine de pesage comprenant :

une cellule de balance pour peser un objet et délivrer en sortie un signal de poids indicatif d'une valeur de poids mesurée dudit objet ;

une cellule de détection de vibrations disposée sur le même plancher que ladite cellule de balance pour délivrer en sortie un signal de vibration de plancher indicatif de la vibration dudit plancher ;

des moyens de correction (14) pour corriger ledit signal de poids en fonction dudit signal de vibration de plancher délivré en sortie de ladite cellule de détection de vibrations et générer par conséquent un signal corrigé en fonction des vibrations indicatif d'une valeur de poids corrigée dudit objet ne contenant pas les effets de ladite vibration dudit plancher ; et

des moyens de commande de correction (120) pour détecter les composantes de vibration dudit plancher et arrêter le fonctionnement desdits moyens de correction en comparant lesdites composantes de vibration à une valeur de référence.

2. Machine de pesage selon la revendication 1, dans laquelle lesdits moyens de commande de correction comprennent :

un filtre qui est connecté à ladite cellule de balance en parallèle avec lesdits moyens de correction de façon à recevoir ledit signal de poids de ladite cellule de balance ; et

des moyens de détection de composantes de vibration pour comparer ledit signal de poids avant et après le passage à travers ledit filtre et détecter par conséquent les composantes de vibration dudit plancher ;

ladite machine de pesage comprenant de plus des moyens de commande pour provoquer la réalisation d'une comparaison entre lesdites composantes de vibration et ladite valeur de référence durant un intervalle de temps de comparaison préétabli.

3. Machine de pesage selon la revendication 1, dans laquelle lesdits moyens de commande de correction comprennent :

un filtre qui est connecté à ladite cellule de détection de vibrations en parallèle avec lesdits moyens de correction de façon à recevoir ledit signal de vibration de plancher depuis ladite cellule de détection de vibrations ; et

des moyens de détection de composantes de vibration pour comparer ledit signal de poids avant et après le passage à travers ledit filtre et détecter par conséquent les composantes de vibration dudit plancher ;

ladite machine de pesage comprenant de plus des moyens de commande pour provoquer la réalisation d'une comparaison entre lesdites composantes de vibration et ladite valeur de référence durant un intervalle de temps de comparaison préétabli.

4. Machine de pesage selon la revendication 1, comprenant de plus :

des premiers moyens de détection de pic pour détecter des pics dans ledit signal de poids de ladite cellule de balance ; et

des deuxièmes moyens de détection de pic pour détecter des pics dans un signal corrigé en fonction des vibrations délivré en sortie desdits moyens de correction ;

lesdits moyens de commande de correction comprenant des moyens de comparaison de pics pour utiliser un pic détecté par lesdits deuxièmes moyens de détection de pic comme étant ladite valeur de référence et comparer un pic détecté par lesdits premiers moyens de détection de pic à ladite valeur de référence.

5. Machine de pesage selon la revendication 1, dans laquelle lesdits moyens de commande de correction comprennent :

des moyens de réglage de point zéro destinés à fonctionner durant un intervalle de temps de réglage de point zéro spécifié, à mémoriser un niveau de point zéro indiqué par un signal de point zéro obtenu en retirant lesdites composantes de vibration dudit signal de poids, et à délivrer par conséquent en sortie un signal de point zéro indicatif dudit niveau de point zéro ; et

des moyens de détection d'amplitude pour détecter l'amplitude dudit signal de vibration de plancher à partir de la différence entre ledit signal de vibration de plancher et ledit signal de point zéro.

6.  Machine de pesage selon la revendication 1, dans laquelle lesdits moyens de commande de correction comprennent :

des moyens de réglage de point zéro destinés à fonctionner durant un intervalle de temps de réglage de point zéro spécifié, à mémoriser un niveau de point zéro indiqué par un signal de point zéro obtenu en retirant lesdites composantes de vibration d'un signal de poids sans charge délivré en sortie de ladite cellule de balance lorsqu'aucune charge n'est appliquée à celle-ci par aucun objet, et à délivrer par conséquent en sortie un signal de point zéro indicatif dudit niveau de point zéro ; et

des moyens de détection d'amplitude pour détecter l'amplitude dudit signal de poids sans charge à partir de la différence entre ledit signal de poids sans charge et ledit signal de point zéro.

7.  Machine de pesage selon la revendication 1, dans laquelle ladite cellule de détection de vibrations est l'une d'une pluralité de cellules de détection de vibrations similaires et lesdits moyens de correction comprennent :

des moyens de calcul de vibration pour détecter les modes de vibration dudit plancher à partir de composantes de vibration de signaux de vibration de plancher délivrés en sortie par ladite pluralité de cellules de détection de vibrations, et calculer par conséquent le déplacement vertical dudit plancher dans la position de ladite cellule de balance ; et

des moyens de correction de vibration pour générer un signal corrigé en fonction des vibrations en retirant lesdites composantes de vibration dudit signal de poids grâce à l'utilisation dudit déplacement vertical ;

lesdits moyens de commande de correction comprenant des moyens de comparaison pour comparer ledit déplacement vertical calculé par lesdits moyens de calcul de vibration à ladite valeur de référence.

# Fig.1.

# Fig.2.

9 CPU

| | | |
|---|---|---|
| 12 | | |
| SWITCHING CIRCUIT | | |

$10_1$ DIGITAL FILTER → $W_1$

$14_1$ FLOOR VIBRATION CORRECTING MEANS → $BS_1 (W)$

$10_m$ DIGITAL FILTER → $W_m$

$14_m$ FLOOR VIBRATION CORRECTING MEANS → $BS_m (W)$

20 COMBINATION CALCULATING MEANS → OS

$11_1$ DIGITAL FILTER

$11_n$ DIGITAL FILTER → $D_n$

$S_m$ ...... $S_1$

13 FLOOR VIBRATION CALCULATING MEANS

# Fig.3.

32   3(4)   32

31   31   3b(4b)

3a(4a)   32   3(4)

# Fig.4.

Y

P   3(4)

y

0   x   X

Fig.5

EP 0 818 669 B1

# Fig.6.

# Fig.8.

# Fig.7.

Fig.9

CPU 45

SWITCHING CIRCUIT 47

DIGITAL FILTER 461
DIGITAL FILTER 462
DIGITAL FILTER 463
DIGITAL FILTER 46i
DIGITAL FILTER 46m

$W_1$
$W_2$
$W_3$
$W_i$
$W_m$

FLOOR VIBRATION CORRECTING MEANS 50

$BS_1 (W)$
$BS_2 (W)$
$BS_3 (W)$
$BS_i (W)$
$BS_m (W)$

COMBINATION CALCULATING MEANS 48

OS

$D_n (W_m)$
$D_i (W_i)$

FLOOR VIBRATION CALCULATING MEANS 49

$S_1 \sim S_m$

Fig.10

Fig.11

FLOOR VIBRATION
CORRECTING
MEANS

CPU

EP 0 818 669 B1

Fig.12

EP 0 818 669 B1

## Fig.13

EP 0 818 669 B1

## Fig.14

Fig.15

SWITCHING CIRCUIT

DIGITAL FILTER — 101
DIGITAL FILTER — 10m
DIGITAL FILTER — 111
DIGITAL FILTER — 11m

12

$W_1$ — 1271
$W_m$
$D_1$
$D_m$

PEAK DETECTING — 1301
PEAK DETECTING — 130m
$P_1$
$P_1$
$ST_m(DR_m)$

SWITCH — 1271
SWITCH — 127m

PEAK COMPARING — 1351 (1201)
PEAK COMPARING — 135m
$P_1$
$ST_1(DR_1)$

FLOOR VIBRATION CORRECTING MEANS — 141
FLOOR VIBRATION CORRECTING MEANS — 14m
FLOOR VIBRATION CORRECTING MEANS — 13
$P_2$
$S_1$
$S_m$
$P_2$

115

PEAK DETECTING — 1311
PEAK DETECTING — 131m
$BS_1$
$BS_m$

20

COMBINATION CALCULATING MEANS

OS

CPU — 94

## Fig.16

EP 0 818 669 B1

## Fig.17

EP 0 818 669 B1

Fig.18